# EUROPEAN PATENT APPLICATION

(11) **EP 4 831 136 A1**
(43) Date of publication of application: **28.10.2026**
(21) Application number: 24907556.5
(22) Date of filing: 20.12.2024
(51) Int. Cl.: C03C 3/062, C03C 3/064, C03C 3/068, C03C 3/083, C03C 3/085, C03C 3/091, C03C 3/095, C03C 3/097, G02B 1/00, G02B 3/00

(54) **OPTICAL GLASS, OPTICAL ELEMENT, OPTICAL SYSTEM, OBJECTIVE LENS FOR MICROSCOPE, INTERCHANGEABLE LENS FOR CAMERA, ENDOSCOPIC INSTRUMENT, AND OPTICAL DEVICE**

(30) Priority: 22.12.2023 JP 2023217061; 25.12.2023 JP 2023218032
(71) Applicant: NIKON CORPORATION, Tokyo 140-8601 (JP)
(72) Inventor: OZEKI, Ayumi, Tokyo 140-8601 (JP); TAKASU, Shuhei, Tokyo 140-8601 (JP); YOSHIMOTO, Kohei, Tokyo 140-8601 (JP)
(74) Representative: Viering, Jentschura & Partner mbB Patent- und Rechtsanwälte
(86) International application number: PCT/JP2024/045272
(87) International publication number: WO 2025/135173

(57) **Abstract**

An optical glass comprising, in mol%:
SiO₂ content: 15% or more and 55% or less; Al₂O₃ content: 7% or more and 42% or less; a total content of TiO₂ and Nb₂O₅ (TiO₂ + Nb₂O₅) of 0% or more and 21% or less; a total content of La₂O₃, Y₂O₃, ZrO₂, and Ta₂O₅ (La₂O₃ + Y₂O₃ + ZrO₂ + Ta₂O₅): 15% or more and 55% or less; and a total content of Al₂O₃, TiO₂, ZrO₂, Nb₂O₅, and Ta₂O₅ (Al₂O₃ + TiO₂ + ZrO₂ + Nb₂O₅ + Ta₂O₅): 32% or more and 65% or less.

## Description

### Technical Field

The present invention relates to an optical glass, an optical element, an optical system, a microscope objective lens, an interchangeable lens for a camera, an endoscope device, and an optical device. The present invention claims priority from Japanese Patent Application No. 2023-217061 filed on December 22, 2023, and Japanese Patent Application No. 2023-218032 filed on December 25, 2023, and the contents described in those applications are incorporated herein by reference for designated States in which incorporation by reference of documents is permitted.

### Background Art

Optical glass is used in various optical elements and optical devices. For example, Patent Document 1 discloses optical glass used in various lenses.

### Prior Art Documents

### Patent Document

PTL 1:Japanese Unexamined Patent Application Publication No. 2006-219365

### Summary of the Invention

A first aspect of the present invention is an optical glass comprising, in mol%:
a SiO₂ content of 15% or more and 55% or less;
an Al₂O₃ content of 7% or more and 42% or less;
a total content of TiO₂ and Nb₂O₅ (TiO₂ + Nb₂O₅) of 0% or more and 21% or less;
a total content of La₂O₃, Y₂O₃, ZrO₂, and Ta₂O₅ (La₂O₃ + Y₂O₃ + ZrO₂ + Ta₂O₅) of 15% or more and 55% or less; and
a total content of Al₂O₃, TiO₂, ZrO₂, Nb₂O₅, and Ta₂O₅ (Al₂O₃ + TiO₂ + ZrO₂ + Nb₂O₅ + Ta₂O₅) of 32% or more and 65% or less.

A second aspect of the present invention is an optical glass comprising, in mol%:
a SiO₂ content of 7% or more and 35% or less;
an Al₂O₃ content of 5% or more and 45% or less;
a total content of La₂O₃, Y₂O₃, ZrO₂, and Ta₂O₅ (La₂O₃ + Y₂O₃ + ZrO₂ + Ta₂O₅) of 30% or more and 65% or less; and
a total content of Al₂O₃, TiO₂, ZrO₂, Nb₂O₅, and Ta₂O₅ (Al₂O₃ + TiO₂ + ZrO₂ + Nb₂O₅ + Ta₂O₅) of 45% or more and 78% or less.

A third aspect of the present invention is an optical glass comprising, in mol%:
a SiO₂ content of 7% or more and 55% or less;
an Al₂O₃ content of 5% or more and 45% or less;
a total content of La₂O₃, Y₂O₃, ZrO₂, and Ta₂O₅ (La₂O₃ + Y₂O₃ + ZrO₂ + Ta₂O₅) of 15% or more and 65% or less; and
a total content of Al₂O₃, TiO₂, ZrO₂, Nb₂O₅, and Ta₂O₅ (Al₂O₃ + TiO₂ + ZrO₂ + Nb₂O₅ + Ta₂O₅) of 32% or more and 78% or less.

Another aspect of the present invention is an optical element using the optical glass described above.

Another aspect of the present invention is an optical system including the optical element described above.

Another aspect of the present invention is a microscope objective lens including an optical system including the optical element described above.

Another aspect of the present invention is an interchangeable lens for a camera including an optical system including the optical element described above.

Another aspect of the present invention is an endoscope device including an optical system including the optical element described above.

Another aspect of the present invention is an optical device including an optical system including the optical element described above.

Another aspect of the present invention is a cemented lens having a first lens element and a second lens element, wherein at least one of the first lens element and the second lens element is made of the optical glass described above.

Another aspect of the present invention is an optical system including the cemented lens described above.

Another aspect of the present invention is a microscope objective lens including an optical system including the cemented lens described above.

Another aspect of the present invention is an interchangeable lens for a camera including an optical system including the cemented lens described above.

Another aspect of the present invention is an optical device including an optical system including the cemented lens described above.

### Brief Description of the Drawings

[Fig.1] A perspective view showing an example in which the optical device according to the present embodiment is an imaging device.
[Fig.2] A schematic diagram showing another example in which the optical device according to the present embodiment is an imaging device, and is a front view of the imaging device.
[Fig.3] A schematic diagram showing another example in which the optical device according to the present embodiment is an imaging device, and is a rear view of the imaging device.
[Fig.4] A block diagram showing an example of the configuration of a multiphoton microscope according to the present embodiment.
[Fig.5] A schematic diagram showing an example of a cemented lens according to the present embodiment.
[Fig.6] A schematic diagram showing an example of an endoscope device according to the present embodiment.
[Fig.7] A schematic diagram showing the overall configuration of a gas-jet type floating furnace according to the present embodiment.
[Fig.8] An enlarged schematic diagram of a pedestal on a stage of the gas-jet type floating furnace according to the present embodiment.
[Fig.9] A graph plotting optical constants (ν_{d}-P_{g,F}) of Examples 1 to 32. The dotted lines indicate P_{g,F} = -0.00204 × ν_{d} + 0.657 and P_{g},_{F} = -0.00204 × ν_{d} + 0.640.
[Fig.10] A graph plotting optical constants (ν_{d}-n_{d}) of Examples 1 to 32.
[Fig.11] A graph plotting optical constants (ν_{d}-λ₅) of Examples 1 to 32. The dotted lines indicate λ₅ = -5.625 × ν_{g} + 535 and λ₅ = -5.625 × ν_{d} + 542.

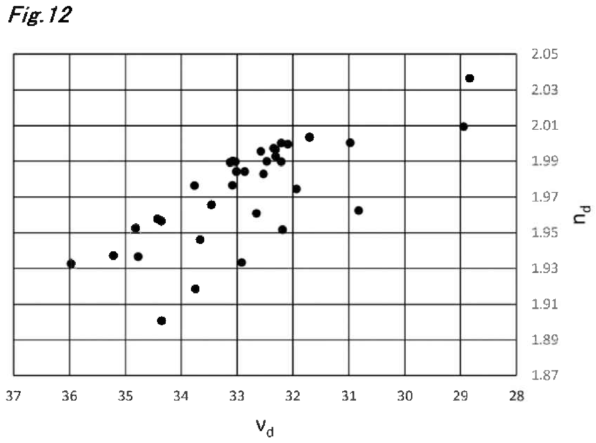

[Fig.12] A graph plotting optical constants (ν_{d}-n_{d}) of Examples 33 to 67.

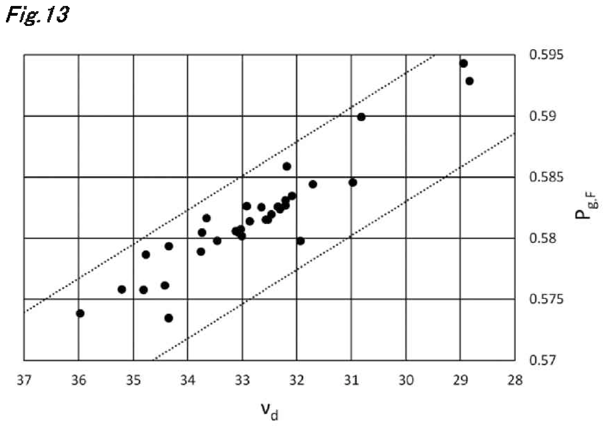

[Fig.13] A graph plotting optical constants (ν_{d}-P_{g,F}) of Examples 33 to 67. The dotted lines indicate P_{g,F} = -0.0028 × ν_{d} + 0.5606 and P_{g,F} = -0.0028 × ν_{d} + 0.6775.

### Mode for Carrying Out the Invention

Hereinafter, embodiments according to the present invention (hereinafter referred to as "the present embodiment") will be described. The following embodiments are examples for explaining the present invention, and are not intended to limit the present invention to the following contents. The present invention may be implemented with appropriate modifications within the scope of the gist thereof.

In the present specification, unless otherwise specified, the content of each component is expressed in mol% (mole percent) relative to the total number of moles of the glass expressed as an oxide-equivalent composition. The oxide-equivalent composition referred to herein is a composition in which oxides, composite salts, and the like used as raw materials of the glass constituent components of the present embodiment are assumed to be completely decomposed and converted into oxides during melting, and each component contained in the glass is represented with the total number of moles of the oxides being 100 mol%.

The expression "not containing a Q component" means that the Q component is not substantially contained, and indicates that the content of this constituent component is at or below an impurity level. The term "at or below an impurity level" means, for example, less than 0.01%.

The expression "devitrification resistance stability" means resistance of glass to devitrification. Here, "devitrification" means a phenomenon in which transparency of the glass is lost due to crystallization or phase separation occurring when the glass is heated to a temperature equal to or higher than the glass transition temperature, or when the molten state is cooled to a temperature equal to or lower than the liquidus temperature.

### <Optical Glass of First Embodiment>

The optical glass according to the first embodiment is an optical glass comprising, in mol%: a SiO₂ content of 15% or more and 55% or less; an Al₂O₃ content of 7% or more and 42% or less; a total content of TiO₂ and Nb₂O₅ (TiO₂ + Nb₂O₅) of 0% or more and 21% or less; a total content of La₂O₃, Y₂O₃, ZrO₂, and Ta₂O₅ (La₂O₃ + Y₂O₃ + ZrO₂ + Ta₂O₅) of 15% or more and 55% or less; and a total content of Al₂O₃, TiO₂, ZrO₂, Nb₂O₅, and Ta₂O₅ (Al₂O₃ + TiO₂ + ZrO₂ + Nb₂O₅ + Ta₂O₅) of 32% or more and 65% or less.

The optical glass according to the first embodiment is a novel optical glass containing La₂O₃, Ta₂O₅, and the like as high-refractive-index and high-transmittance components, and containing SiO₂, Al₂O₃, and the like as low-specific-gravity stabilizing components. The optical glass according to the present embodiment achieves both a high refractive index, a high ultraviolet transmittance, a reduced specific gravity, and high thermal stability (Tₓ - T_{g}), and can stably produce a large glass gob in a floating melting method.

First, each component of the optical glass according to the first embodiment will be described.

SiO₂ is a component that maintains a low specific gravity and enhances devitrification resistance stability, but is also a component that lowers the refractive index. Further, it is a component that forms a network-forming oxide and can improve meltability. If the content of SiO₂ is too low, viscosity decreases, and if it is too high, the refractive index decreases. From this viewpoint, the content of SiO₂ is 15% or more and 55% or less in mol%. The lower limit of this content is preferably 18%, more preferably 22%, and still more preferably 27%. The upper limit of this content is preferably 50%, more preferably 42%, and still more preferably 35%.

Al₂O₃ is a component that maintains a low specific gravity and enhances devitrification resistance stability, but is also a component that lowers the refractive index, partial dispersion ratio, and meltability. If the content of Al₂O₃ is too low, melting stability decreases, and if it is too high, the refractive index decreases. From this viewpoint, the content of Al₂O₃ is 7% or more and 42% or less in mol%. The lower limit of this content is preferably 10%, more preferably 15%, and still more preferably 19%. The upper limit of this content is preferably 35%, more preferably 30%, and still more preferably 27%.

TiO₂ is a component that increases the refractive index and maintains a low specific gravity, but is also a component that lowers transmittance. If the content of TiO₂ is too low, the specific gravity increases, and if it is too high, transmittance decreases. From this viewpoint, the content of TiO₂ is 0% or more and 5% or less in mol%. The upper limit of this content is preferably 3%, more preferably 2%, and still more preferably 1%.

Nb₂O₅ is a component that increases the refractive index, but is also a component that lowers transmittance and dispersion. If the content of Nb₂O₅ is too low, the refractive index becomes low, and if it is too high, transmittance decreases. From this viewpoint, the content of Nb₂O₅ is 0% or more and 21% or less in mol%. The upper limit of this content is preferably 15%, more preferably 10%, and still more preferably 5%.

La₂O₃ is a component that increases refractive index and transmittance without impairing devitrification resistance stability, but is also a component that increases specific gravity. If the content of La₂O₃ is too low, transmittance decreases, and if it is too high, the specific gravity increases. From this viewpoint, the content of La₂O₃ is 0% or more and 33% or less in mol%. The lower limit of this content is preferably 5%, more preferably 9%, and still more preferably 13%. The upper limit of this content is preferably 30%, more preferably 26%, and still more preferably 22%.

Y₂O₃ is a component that increases the refractive index and transmittance. However, if the content of Y₂O₃ is too low, the refractive index becomes low, and if it is too high, meltability decreases. From this viewpoint, the content of Y₂O₃ is 0% or more and 10% or less in mol%. The upper limit of this content is preferably 6%, more preferably 3%, and still more preferably 1%.

ZrO₂ is a component that increases refractive index and transmittance and also enhances devitrification resistance stability. However, if the content of ZrO₂ is too low, meltability decreases, and if it is too high, devitrification resistance stability decreases. From this viewpoint, the content of ZrO₂ is 0% or more and 23% or less in mol%. The lower limit of this content is preferably 3%, more preferably 7%, and still more preferably 11%. The upper limit of this content is preferably 20%, more preferably 18%, and still more preferably 17%.

Ta₂O₅ is a component that increases refractive index and transmittance, but is also a component that increases specific gravity and devitrification resistance stability. If the content of Ta₂O₅ is too low, the refractive index decreases, and if it is too high, the specific gravity increases. From this viewpoint, the content of Ta₂O₅ is 0% or more and 25% or less in mol%. The lower limit of this content is preferably 5%, more preferably 8%, and still more preferably 10%. The upper limit of this content is preferably 21%, more preferably 18%, and still more preferably 16%.

BaO is a component that lowers dispersion while maintaining devitrification resistance stability of the optical glass. However, if the content of BaO is too low, devitrification resistance stability decreases, and if it is too high, meltability decreases. From this viewpoint, the content of BaO is 0% or more and 25% or less in mol%. The lower limit of this content is preferably 1%, more preferably 5%, and still more preferably 12%. The upper limit of this content is preferably 23%, more preferably 19%, and still more preferably 15%.

B₂O₃ is a component for forming a network-forming oxide. However, since B₂O₃ is a component having high volatility, if it is introduced excessively, a variation in glass composition may occur during production and striae may become apparent. From this viewpoint, the content of B₂O₃ is 0% or more and 5% or less in mol%. The upper limit of this content is preferably 3%, more preferably 2%, and still more preferably 1%. Most preferably, B₂O₃ is not contained.

The total content of TiO₂ and Nb₂O₅ (TiO₂ + Nb₂O₅) is 0% or more and 21% or less. The upper limit of this total content is preferably 15%, more preferably 10%, and still more preferably 5%. By setting the total content of TiO₂ and Nb₂O₅ (TiO₂ + Nb₂O₅) within such a range, a decrease in transmittance can be suppressed and high transmittance can be obtained.

The total content of Al₂O₃, TiO₂, ZrO₂, Nb₂O₅, and Ta₂O₅ (Al₂O₃ + TiO₂ + ZrO₂ + Nb₂O₅ + Ta₂O₅) is 32% or more and 65% or less. The lower limit of this total content is preferably 37%, more preferably 40%, and still more preferably 43%. The upper limit of this total content is preferably 59%, more preferably 55%, and still more preferably 52%. By setting the total content of Al₂O₃, TiO₂, ZrO₂, Nb₂O₅, and Ta₂O₅ (Al₂O₃ + TiO₂ + ZrO₂ + Nb₂O₅ + Ta₂O₅) within such a range, devitrification resistance stability during melting can be enhanced, and both a high refractive index and high transmittance can be achieved.

The total content of La₂O₃, Y₂O₃, ZrO₂, and Ta₂O₅ (La₂O₃ + Y₂O₃ + ZrO₂ + Ta₂O₅) is 15% or more and 55% or less. The lower limit of this total content is preferably 20%, more preferably 25%, and still more preferably 30%. The upper limit of this total content is preferably 50%, more preferably 45%, and still more preferably 40%. By setting the total content of La₂O₃, Y₂O₃, ZrO₂, and Ta₂O₅ (La₂O₃ + Y₂O₃ + ZrO₂ + Ta₂O₅) within such a range, refractive index and transmittance can be increased.

The total content of SiO₂ and Al₂O₃ (SiO₂ + Al₂O₃) is 42% or more and 75% or less. The lower limit of this total content is preferably 44%, more preferably 47%, and still more preferably 50%. The upper limit of this total content is preferably 70%, more preferably 65%, and still more preferably 60%. By setting the total content of SiO₂ and Al₂O₃ (SiO₂ + Al₂O₃) within such a range, it is possible to suppress a decrease in refractive index while maintaining a low specific gravity.

If necessary, known refining agents, coloring agents, defoaming agents, fluorine compounds, and the like may be added in appropriate amounts to the glass composition for the purposes of refining, coloring, decoloring, fine adjustment of optical constants, and the like. Further, in addition to the above components, other components may also be added within a range in which the effects of the optical glass according to the present embodiment can be obtained.

As raw materials, it is preferable to use high-purity materials having a low impurity content. The term "high-purity material" refers to a material containing 99.85 mass% or more of the relevant component. By using such high-purity materials, the amount of impurities is reduced, and as a result, the internal transmittance of the optical glass tends to be increased.

Next, physical properties of the optical glass of the first embodiment will be described.

The optical glass according to the first embodiment preferably has high internal transmittance. In view of such circumstances, the wavelength (λ₅) at which the internal transmittance per 10 mm in the optical glass according to the present embodiment becomes 5% is 352 nm or less. The lower limit of the wavelength (λ₅) is, for example, 259 nm. The upper limit of the wavelength (λ₅) is preferably 310 nm, more preferably 300 nm, and still more preferably 285 nm.

From the viewpoint of reducing the thickness of a lens, the optical glass according to the present embodiment preferably has a high refractive index (i.e., a large refractive index (n_{d})). However, in general, as the refractive index (n_{d}) increases, the transmittance tends to decrease. In view of such circumstances, the refractive index with respect to the d-line (n_{d}) of the optical glass according to the present embodiment is 1.75 or more and 1.97 or less. The lower limit of the refractive index (n_{d}) is preferably 1.78, more preferably 1.80, and still more preferably 1.82. The upper limit of the refractive index (n_{d}) is preferably 1.87, more preferably 1.85, and still more preferably 1.84.

The Abbe number (ν_{d}) of the optical glass according to the first embodiment is 28 or more and 47 or less. The lower limit of the Abbe number (ν_{d}) is preferably 30, more preferably 31, and still more preferably 32. The upper limit of the Abbe number (ν_{d}) is preferably 37, more preferably 36, and still more preferably 35.

For the optical glass according to the first embodiment, a preferred combination of the refractive index (n_{d}) and the Abbe number (ν_{d}) is such that the refractive index with respect to the d-line (n_{d}) is within a range of 1.80 or more and 1.87 or less, and the Abbe number (ν_{d}) is within a range of 33 or more and 37 or less. The optical glass according to the present embodiment having such properties enables, for example, the design of an optical system in which chromatic aberration and other aberrations are well corrected by combining it with other optical glasses.

From the viewpoint of aberration correction of a lens, the optical glass according to the present embodiment preferably has a small partial dispersion ratio (P_{g,F}). In view of such circumstances, the partial dispersion ratio (P_{g,F}) of the optical glass according to the present embodiment preferably satisfies the following Formula (1): ${P}_{g , F} < - 0.00204 \times {ν}_{d} + 0.657$ (1) Further, it more preferably satisfies the following Formula (2): $- 0.00204 \times {ν}_{d} + 0.640 < {P}_{g , F} < - 0.00204 \times {ν}_{d} + 0.657$ (2)

From the viewpoint of ultraviolet or visible light transmittance of an optical system, the wavelength (λ₅) at which the internal transmittance per 10 mm of the optical glass according to the present embodiment becomes 5% preferably satisfies the following Formula (3): ${λ}_{5} < - 5.625 \times {ν}_{d} + 542$ (3) Further, it more preferably satisfies the following Formula (4): $- 5.625 \times {ν}_{d} + 535 < {λ}_{5} < - 5.625 \times {ν}_{d} + 542$ (4)

ΔT can be used as an index of devitrification resistance stability. In general, a high ΔT means that the glass has high devitrification resistance stability. In the present embodiment, both the glass transition temperature (T_{g}) and the crystallization onset temperature (Tₓ) can be measured by differential thermal analysis. In view of such circumstances, the optical glass according to the present embodiment has a temperature difference (ΔT = Tₓ - T_{g}) between the glass transition temperature (T_{g}) and the crystallization onset temperature (Tₓ) of 73°C or more and 259°C or less. The lower limit of this difference is preferably 150°C, more preferably 180°C, and still more preferably 200°C. The upper limit of this difference is preferably 250°C, more preferably 230°C, and still more preferably 220°C.

The optical glass according to the first embodiment has a diameter (D) of 10 mm or more. The lower limit of the diameter (D) is preferably 11.0 mm, more preferably 12.5 mm, and still more preferably 13.5 mm. The upper limit of the diameter (D) is, for example, 14.3 mm or the like. The term "diameter" as used herein refers to the maximum value in the diameter direction of a glass gob, and in the case of a substantially spherical shape, refers to the diameter value thereof.

The optical glass according to the first embodiment has a thickness (T) of 5.03 mm or more. The lower limit of the thickness (T) is preferably 5.20 mm, more preferably 5.40 mm, and still more preferably 5.50 mm. The upper limit of the thickness (T) is, for example, 5.94 mm or the like. The term "thickness" as used herein refers to the height in a direction perpendicular to the maximum value of the diameter (diameter (D)) of the glass gob, and in the case of a substantially spherical shape, refers to the diameter value thereof.

The optical glass according to the first embodiment has a weight of 1700 mg or more. The lower limit of the weight is preferably 1900 mg, more preferably 2000 mg, and still more preferably 2200 mg. The upper limit of the weight is, for example, 3600 mg or the like.

The specific gravity (S_{g}) of the optical glass according to the first embodiment is 4.2 or more and 5.8 or less. The lower limit of the specific gravity (S_{g}) is preferably 4.3, more preferably 4.6, and still more preferably 4.7. The upper limit of the specific gravity (S_{g}) is preferably 5.6, more preferably 5.4, and still more preferably 5.3.

### <Optical Glass of Second Embodiment>

The optical glass according to the second embodiment is an optical glass comprising, in mol%: a SiO₂ content of 7% or more and 35% or less; an Al₂O₃ content of 5% or more and 45% or less; a total content of La₂O₃, Y₂O₃, ZrO₂, and Ta₂O₅ (La₂O₃ + Y₂O₃ + ZrO₂ + Ta₂O₅) of 30% or more and 65% or less; and a total content of Al₂O₃, TiO₂, ZrO₂, Nb₂O₅, and Ta₂O₅ (Al₂O₃ + TiO₂ + ZrO₂ + Nb₂O₅ + Ta₂O₅) of 45% or more and 78% or less.

The optical glass according to the second embodiment is a novel optical glass containing La₂O₃, Ta₂O₅, and the like as high-refractive-index components, and containing Al₂O₃ and the like as low-specific-gravity stabilizing components. The optical glass according to the present embodiment achieves a high refractive index, medium dispersion, high ultraviolet transmittance, reduced specific gravity, and high thermal stability (Tₓ - T_{g}), and can stably produce a large glass gob in a floating melting method.

First, each component of the optical glass according to the second embodiment will be described.

SiO₂ is a component that maintains a low specific gravity and enhances devitrification resistance stability, but is also a component that lowers the refractive index. Further, it is a component that forms a network-forming oxide and can improve meltability. If the content of SiO₂ is too low, viscosity decreases, and if it is too high, the refractive index decreases. From this viewpoint, the content of SiO₂ is 7% or more and 35% or less in mol%. The lower limit of this content is preferably 11%, more preferably 13%, and still more preferably 15%. The upper limit of this content is preferably 32%, more preferably 28%, and still more preferably 24%.

Al₂O₃ is a component that maintains a low specific gravity and enhances devitrification resistance stability, but is also a component that lowers the refractive index, partial dispersion ratio, and meltability. If the content of Al₂O₃ is too low, melting stability decreases, and if it is too high, the refractive index decreases. From this viewpoint, the content of Al₂O₃ is 5% or more and 45% or less in mol%. The lower limit of this content is preferably 10%, more preferably 15%, and still more preferably 20%. The upper limit of this content is preferably 40%, more preferably 35%, and still more preferably 30%.

MgO is a component that maintains a low specific gravity and enhances devitrification resistance stability. When the content of MgO is low, devitrification resistance stability decreases and it tends to become difficult to achieve a low specific gravity. Further, when the content of MgO is too high, the refractive index tends to decrease. From this viewpoint, the MgO content is 0% or more and 9% or less in mol%. The lower limit of this content is preferably 2%, more preferably 3%, and still more preferably 4%. The upper limit of this content is preferably 8%, more preferably 7%, and still more preferably 6%.

La₂O₃ is a component that increases the refractive index and transmittance without impairing devitrification resistance stability, but is also a component that increases specific gravity. When the content of La₂O₃ is low, transmittance tends to decrease, and when it is too high, the specific gravity increases. From this viewpoint, the content of La₂O₃ is 10% or more and 30% or less in mol%. The lower limit of this content is preferably 13%, more preferably 15%, and still more preferably 17%. The upper limit of this content is preferably 25%, more preferably 23%, and still more preferably 21%.

Y₂O₃ is a component that increases the refractive index and transmittance. However, when the content of Y₂O₃ is low, the refractive index tends to decrease, and when it is excessively high, meltability decreases. From this viewpoint, the content of Y₂O₃ is 0% or more and 8% or less in mol%. The lower limit of this content is preferably 2%, more preferably 3%, and still more preferably 4%. The upper limit of this content is preferably 7%, more preferably 6%, and still more preferably 5%.

TiO₂ is a component that increases the refractive index and can maintain a low specific gravity, but it is also a component that lowers transmittance. When the content of TiO₂ is low, the specific gravity tends to increase, and when it is excessively high, the transmittance decreases. From this viewpoint, the content of TiO₂ is 0% or more and 8% or less in mol%. The lower limit of this content is preferably 1%, more preferably 2%, and still more preferably 3%. The upper limit of this content is preferably 7%, more preferably 6%, and still more preferably 5%.

ZrO₂ is a component that increases the refractive index, transmittance, and devitrification resistance stability. However, when the content of ZrO₂ is low, meltability tends to decrease, and when it is excessively high, devitrification resistance stability decreases. From this viewpoint, the content of ZrO₂ is 0% or more and 27% or less in mol%. The lower limit of this content is preferably 5%, more preferably 9%, and still more preferably 13%. The upper limit of this content is preferably 25%, more preferably 23%, and still more preferably 21%.

Nb₂O₅ is a component that increases the refractive index, but it is also a component that lowers transmittance and dispersion. When the content of Nb₂O₅ is low, the refractive index tends to decrease, and when it is excessively high, the transmittance decreases. From this viewpoint, the content of Nb₂O₅ is 0% or more and 22% or less in mol%. The lower limit of this content is preferably 1%, more preferably 2%, and still more preferably 3%. The upper limit of this content is preferably 20%, more preferably 16%, and still more preferably 12%.

Ta₂O₅ is a component that increases the refractive index and transmittance, but it is also a component that increases the specific gravity. When the content of Ta₂O₅ is low, the refractive index tends to decrease, and when it is excessively high, the specific gravity increases. From this viewpoint, the content of Ta₂O₅ is 0% or more and 28% or less in mol%. The lower limit of this content is preferably 4%, more preferably 8%, and still more preferably 12%. The upper limit of this content is preferably 26%, more preferably 24%, and still more preferably 22%.

The total content of SiO₂ and Al₂O₃ (SiO₂ + Al₂O₃) is 28% or more and 60% or less. The lower limit of this total content is preferably 30%, more preferably 32%, and still more preferably 34%. The upper limit of this total content is preferably 55%, more preferably 50%, and still more preferably 45%. By setting the total content of SiO₂ and Al₂O₃ (SiO₂ + Al₂O₃) within such a range, it is possible to suppress a decrease in refractive index while maintaining a low specific gravity.

The total content of Nb₂O₅ and TiO₂ (Nb₂O₅ + TiO₂) is 0% or more and 24% or less. The lower limit of this total content is preferably 1%, more preferably 3%, and still more preferably 5%. The upper limit of this total content is preferably 20%, more preferably 18%, and still more preferably 15%. By setting the total content of Nb₂O₅ and TiO₂ (Nb₂O₅ + TiO₂) within such a range, it is possible to suppress a decrease in transmittance and obtain high transmittance.

The total content of La₂O₃, Y₂O₃, ZrO₂, and Ta₂O₅ (La₂O₃ + Y₂O₃ + ZrO₂ + Ta₂O₅) is 30% or more and 65% or less. The lower limit of this total content is preferably 33%, more preferably 38%, and still more preferably 43%. The upper limit of this total content is preferably 64%, more preferably 61%, and still more preferably 58%. By setting the total content of La₂O₃, Y₂O₃, ZrO₂, and Ta₂O₅ (La₂O₃ + Y₂O₃ + ZrO₂ + Ta₂O₅) within such a range, the refractive index and transmittance can be increased.

The total content of Al₂O₃, TiO₂, ZrO₂, Nb₂O₅, and Ta₂O₅ (Al₂O₃ + TiO₂ + ZrO₂ + Nb₂O₅ + Ta₂O₅) is 45% or more and 78% or less. The lower limit of this total content is preferably 50%, more preferably 55%, and still more preferably 60%. The upper limit of this total content is preferably 75%, more preferably 72%, and still more preferably 69%. By setting the total content of Al₂O₃, TiO₂, ZrO₂, Nb₂O₅, and Ta₂O₅ (Al₂O₃ + TiO₂ + ZrO₂ + Nb₂O₅ + Ta₂O₅) within such a range, devitrification resistance stability during melting can be increased, and both high refractive index and high transmittance can be achieved.

The total content of La₂O₃ and Ta₂O₅ (La₂O₃ + Ta₂O₅) is 20% or more and 50% or less. The lower limit of this total content is preferably 25%, more preferably 29%, and still more preferably 33%. The upper limit of this total content is preferably 48%, more preferably 46%, and still more preferably 44%. By setting the total content of La₂O₃ and Ta₂O₅ (La₂O₃ + Ta₂O₅) within such a range, the refractive index and transmittance can be increased. At this time, the optical glass may further contain at least one component selected from MgO, Y₂O₃, ZrO₂, TiO₂, and Nb₂O₅.

In addition, as necessary, known components such as a refining agent, a coloring agent, a decolorizing agent, a defoaming agent, and a fluorine compound may be added in appropriate amounts to the glass composition for purposes such as refining, coloring, decolorizing, or fine adjustment of optical constants. Further, in addition to the above components, other components may also be added within a range in which the effects of the optical glass according to the present embodiment can be obtained.

As raw materials, it is preferable to use high-purity materials having a low impurity content. The term "high-purity material" refers to a material containing 99.85 mass% or more of the relevant component. By using such high-purity materials, the amount of impurities is reduced, and as a result, the internal transmittance of the optical glass tends to be increased.

Next, physical properties of the optical glass of the second embodiment will be described.

From the viewpoint of reducing the thickness of a lens, the optical glass according to the present embodiment preferably has a high refractive index (i.e., a large refractive index (n_{d})). However, in general, as the refractive index (n_{d}) increases, the transmittance tends to decrease. In view of such circumstances, the refractive index with respect to the d-line (n_{d}) of the optical glass according to the present embodiment is 1.85 or more and 2.05 or less. The lower limit of the refractive index (n_{d}) is preferably 1.87, more preferably 1.89, and still more preferably 1.91. The upper limit of the refractive index (n_{d}) is preferably 2.03, more preferably 2.02, and still more preferably 2.01.

The Abbe number (ν_{d}) of the optical glass according to the second embodiment is 25 or more and 40 or less. The lower limit of the Abbe number (ν_{d}) is preferably 28, more preferably 29, and still more preferably 30. The upper limit of the Abbe number (ν_{d}) is preferably 38, more preferably 36, and still more preferably 35.

For the optical glass according to the present embodiment, a preferred combination of the refractive index (n_{d}) and the Abbe number (ν_{d}) is such that the refractive index with respect to the d-line (n_{d}) is within a range of 1.95 or more and 2.01 or less, and the Abbe number (ν_{d}) is within a range of 31 or more and 34 or less. The optical glass according to the present embodiment having such properties enables, for example, the design of an optical system in which chromatic aberration and other aberrations are well corrected by combining it with other optical glasses.

From the viewpoint of aberration correction of a lens, the optical glass according to the present embodiment preferably has a small partial dispersion ratio (P_{g,F}). In view of such circumstances, the partial dispersion ratio (P_{g,F}) of the optical glass according to the present embodiment preferably satisfies the following Formula (1): $- 0.0028 \times {ν}_{d} + 0.5606 < {P}_{g , F} < - 0.0028 \times {ν}_{d} + 0.6775$ (1)

From the viewpoint of aberration correction of a lens, the optical glass according to the present embodiment preferably has large anomalous dispersion (ΔP_{g,F}). In view of such circumstances, the value indicating anomalous dispersion (ΔP_{g,F}) of the optical glass according to the present embodiment is preferably -0.013 or more. The lower limit of the value indicating anomalous dispersion (ΔP_{g,F}) is more preferably -0.0011, and still more preferably -0.009. The upper limit of the value indicating anomalous dispersion (ΔP_{g,F}) is not particularly limited, but may be, for example, -0.002.

The specific gravity (S_{g}) of the optical glass according to the present embodiment is 4.5 or more and 6.5 or less. The lower limit of the specific gravity (S_{g}) is preferably 4.7, more preferably 4.8, and still more preferably 4.9. The upper limit of the specific gravity (S_{g}) is preferably 6.4, more preferably 6.3, and still more preferably 6.2.

ΔT can be used as an index of devitrification resistance stability. In general, a high ΔT means that the glass has high devitrification resistance stability. In the present embodiment, both the glass transition temperature (T_{g}) and the crystallization onset temperature (Tₓ) can be measured by differential thermal analysis. In view of such circumstances, the optical glass according to the present embodiment has a temperature difference (ΔT = Tₓ - T_{g}) between the glass transition temperature (T_{g}) and the crystallization onset temperature (Tₓ) of 75°C or more and 220°C or less. The lower limit of this difference is preferably 95°C, more preferably 115°C, and still more preferably 135°C. The upper limit of this difference is preferably 210°C, more preferably 200°C, and still more preferably 190°C.

The optical glass according to the second embodiment has a diameter (D) of 8 mm or more. The lower limit of the diameter (D) is preferably 9.2 mm, more preferably 9.4 mm, and still more preferably 9.6 mm. The upper limit of the diameter (D) is, for example, about 11.8 mm. As used herein, the "diameter" refers to the maximum value in the diameter direction of the glass gob, and in the case of a substantially spherical shape, refers to the diameter value thereof.

The optical glass according to the second embodiment has a thickness (T) of 4.5 mm or more. The lower limit of the thickness (T) is preferably 4.7 mm, more preferably 4.8 mm, and still more preferably 4.9 mm. The upper limit of the thickness (T) is, for example, about 5.8 mm. As used herein, the "thickness" refers to the height in a direction perpendicular to the maximum value of the diameter of the glass gob (diameter (D)), and in the case of a substantially spherical shape, refers to the diameter value thereof.

The optical glass according to the present embodiment has a weight of 1450 mg or more. The lower limit of the weight is preferably 1500 mg, more preferably 1600 mg, and still more preferably 1700 mg. The upper limit of the weight is, for example, about 1950 mg.

### <Optical Glass of Third Embodiment>

The optical glass according to the third embodiment is an optical glass having, in mol%, a SiO₂ content of 7% or more and 55% or less, an Al₂O₃ content of 5% or more and 45% or less, a total content of La₂O₃, Y₂O₃, ZrO₂, and Ta₂O₅ (La₂O₃ + Y₂O₃ + ZrO₂ + Ta₂O₅) of 15% or more and 65% or less, and a total content of Al₂O₃, TiO₂, ZrO₂, Nb₂O₅, and Ta₂O₅ (Al₂O₃ + TiO₂ + ZrO₂ + Nb₂O₅ + Ta₂O₅) of 32% or more and 78% or less.

The optical glass according to the third embodiment is a novel optical glass that optionally contains, as high refractive index components, La₂O₃, Y₂O₃, ZrO₂, Ta₂O₅, and the like, and contains, as low specific gravity stabilizing components, SiO₂, Al₂O₃, and the like. The optical glass according to the present embodiment has a high refractive index and medium dispersion and, for example, can be suitably used as a lens material for various optical devices. In addition, for example, a large glass gob can be stably produced using a floating melting method.

First, each component of the optical glass according to the third embodiment will be described.

SiO₂ is a component that maintains a low specific gravity and increases devitrification resistance stability, but it is also a component that lowers the refractive index. It is also a component that forms a network-forming oxide and can increase meltability. When the content of SiO₂ is excessively low, the viscosity decreases, and when it is excessively high, the refractive index decreases. From this viewpoint, the content of SiO₂ is 7% or more and 55% or less in mol%. The lower limit of this content is preferably 11%, more preferably 13%, and still more preferably 15%. The upper limit of this content is preferably 50%, more preferably 42%, and still more preferably 35%.

Al₂O₃ is a component that maintains a low specific gravity and increases devitrification resistance stability, but it is also a component that lowers the refractive index, partial dispersion ratio, and meltability. When the content of Al₂O₃ is excessively low, melting stability decreases, and when it is excessively high, the refractive index decreases. From this viewpoint, the content of Al₂O₃ is 5% or more and 45% or less in mol%. The lower limit of this content is preferably 10%, more preferably 15%, and still more preferably 20%. The upper limit of this content is preferably 40%, more preferably 35%, and still more preferably 30%.

MgO is a component that maintains a low specific gravity and increases devitrification resistance stability. When the content of MgO is low, devitrification resistance stability decreases and it tends to become difficult to achieve a low specific gravity. When the content of MgO is excessively high, the refractive index tends to decrease. From this viewpoint, the MgO content is 0% or more and 9% or less in mol%. The lower limit of this content is preferably 2%, more preferably 3%, and still more preferably 4%. The upper limit of this content is preferably 8%, more preferably 7%, and still more preferably 6%.

BaO is a component that reduces dispersion while maintaining devitrification resistance stability of the optical glass. However, when the content of BaO is excessively low, devitrification resistance stability decreases, and when it is excessively high, meltability decreases. From this viewpoint, the content of BaO is 0% or more and 25% or less in mol%. The lower limit of this content is preferably 1%, more preferably 5%, and still more preferably 12%. The upper limit of this content is preferably 23%, more preferably 19%, and still more preferably 15%.

La₂O₃ is a component that increases refractive index and transmittance without impairing devitrification resistance stability, but it is also a component that increases the specific gravity. When the content of La₂O₃ is low, the transmittance tends to decrease, and when it is excessively high, the specific gravity increases. From this viewpoint, the content of La₂O₃ is 0% or more and 33% or less in mol%. The lower limit of this content is preferably 5%, more preferably 9%, and still more preferably 13%. The upper limit of this content is preferably 30%, more preferably 26%, and still more preferably 22%.

Y₂O₃ is a component that increases the refractive index and transmittance. When the content of Y₂O₃ is low, the refractive index tends to decrease, and when it is excessively high, meltability decreases. From this viewpoint, the content of Y₂O₃ is 0% or more and 10% or less in mol%. The lower limit of this content is preferably 2%, more preferably 3%, and still more preferably 4%. The upper limit of this content is preferably 7%, more preferably 6%, and still more preferably 5%.

TiO₂ is a component that increases the refractive index and can maintain a low specific gravity, but it is also a component that lowers transmittance. When the content of TiO₂ is low, the specific gravity tends to increase, and when it is excessively high, the transmittance decreases. From this viewpoint, the content of TiO₂ is 0% or more and 8% or less in mol%. The lower limit of this content is preferably 1%, more preferably 2%, and still more preferably 3%. The upper limit of this content is preferably 7%, more preferably 6%, and still more preferably 5%.

ZrO₂ is a component that increases the refractive index, transmittance, and devitrification resistance stability. When the content of ZrO₂ is low, meltability tends to decrease, and when it is excessively high, devitrification resistance stability decreases. From this viewpoint, the content of ZrO₂ is 0% or more and 27% or less in mol%. The lower limit of this content is preferably 5%, more preferably 9%, and still more preferably 13%. The upper limit of this content is preferably 25%, more preferably 23%, and still more preferably 21%.

Nb₂O₅ is a component that increases the refractive index, but it is also a component that lowers transmittance and dispersion. When the content of Nb₂O₅ is low, the refractive index tends to decrease, and when it is excessively high, the transmittance decreases. From this viewpoint, the content of Nb₂O₅ is 0% or more and 22% or less in mol%. The lower limit of this content is preferably 1%, more preferably 2%, and still more preferably 3%. The upper limit of this content is preferably 20%, more preferably 16%, and still more preferably 12%.

Ta₂O₅ is a component that increases the refractive index and transmittance, but it is also a component that increases the specific gravity. When the content of Ta₂O₅ is low, the refractive index tends to decrease, and when it is excessively high, the specific gravity increases. From this viewpoint, the content of Ta₂O₅ is 0% or more and 28% or less in mol%. The lower limit of this content is preferably greater than 0%, more preferably 4%, and still more preferably 8%. The upper limit of this content is preferably 26%, more preferably 24%, and still more preferably 22%.

B₂O₃ is a component for forming a network-forming oxide. However, since B₂O₃ is a component having high volatility, if it is introduced excessively, fluctuations in the glass composition during production may occur and striae may become apparent. From this viewpoint, the content of B₂O₃ is 0% or more and 5% or less in mol%. The upper limit of this content is preferably 3%, more preferably 2%, and still more preferably 1%. Most preferably, B₂O₃ is not contained.

The total content of SiO₂ and Al₂O₃ (SiO₂ + Al₂O₃) is 28% or more and 75% or less. The lower limit of this total content is preferably 30%, more preferably 32%, and still more preferably 34%. The upper limit of this total content is preferably 70%, more preferably 65%, and still more preferably 60%. By setting the total content of SiO₂ and Al₂O₃ (SiO₂ + Al₂O₃) within such a range, it is possible to suppress a decrease in refractive index while maintaining a low specific gravity.

The total content of Nb₂O₅ and TiO₂ (Nb₂O₅ + TiO₂) is 0% or more and 24% or less. The lower limit of this total content is preferably 1%, more preferably 3%, and still more preferably 5%. The upper limit of this total content is preferably 20%, more preferably 18%, and still more preferably 15%. By setting the total content of Nb₂O₅ and TiO₂ (Nb₂O₅ + TiO₂) within such a range, it is possible to suppress a decrease in transmittance and obtain high transmittance. The "total content of Nb₂O₅ and TiO₂ (Nb₂O₅ + TiO₂)" and the "total content of TiO₂ and Nb₂O₅ (TiO₂ + Nb₂O₅)" mean the same thing.

The total content of La₂O₃, Y₂O₃, ZrO₂, and Ta₂O₅ (La₂O₃ + Y₂O₃ + ZrO₂ + Ta₂O₅) is 15% or more and 65% or less. The lower limit of this total content is preferably 20%, more preferably 25%, and still more preferably 30%. The upper limit of this total content is preferably 64%, more preferably 61%, and still more preferably 58%. By setting the total content of La₂O₃, Y₂O₃, ZrO₂, and Ta₂O₅ (La₂O₃ + Y₂O₃ + ZrO₂ + Ta₂O₅) within such a range, the refractive index and transmittance can be increased.

The total content of Al₂O₃, TiO₂, ZrO₂, Nb₂O₅, and Ta₂O₅ (Al₂O₃ + TiO₂ + ZrO₂ + Nb₂O₅ + Ta₂O₅) is 32% or more and 78% or less. The lower limit of this total content is preferably 37%, more preferably 40%, and still more preferably 43%. The upper limit of this total content is preferably 75%, more preferably 72%, and still more preferably 69%. By setting the total content of Al₂O₃, TiO₂, ZrO₂, Nb₂O₅, and Ta₂O₅ (Al₂O₃ + TiO₂ + ZrO₂ + Nb₂O₅ + Ta₂O₅) within such a range, devitrification resistance stability during melting can be improved, and both a high refractive index and a high transmittance can be achieved.

The total content of La₂O₃ and Ta₂O₅ (La₂O₃ + Ta₂O₅) is 13% or more and 50% or less. The lower limit of this total content is preferably 17%, more preferably 21%, and still more preferably 25%. The upper limit of this total content is preferably 48%, more preferably 46%, and still more preferably 44%. By setting the total content of La₂O₃ and Ta₂O₅ (La₂O₃ + Ta₂O₅) within such a range, the refractive index and transmittance can be increased. At this time, at least one component selected from MgO, BaO, Y₂O₃, ZrO₂, TiO₂, and Nb₂O₅ may be further contained.

In addition, if necessary, suitable amounts of known clarifiers, colorants, defoamers, fluorine compounds, and other components may be added to the glass composition for the purpose of clarifying, coloring, decoloring, fine-tuning of optical constants, etc. Furthermore, other components may be added in addition to the above components, as long as the effects of the optical glass according to this embodiment can be obtained.

As the raw materials, it is preferable to use high-purity materials having a low content of impurities. High-purity materials refer to materials containing 99.85 mass% or more of the corresponding component. By using high-purity materials, the amount of impurities becomes small as a result, and thus the internal transmittance of the optical glass tends to be increased.

Next, the physical property values of the optical glass of the third embodiment will be described.

From the viewpoint of reducing the thickness of a lens, it is desirable that the optical glass according to the present embodiment has a high refractive index (that is, a large refractive index (n_{d})). Therefore, the refractive index (n_{d}) with respect to the d-line in the optical glass according to the present embodiment is 1.75 or more and 2.05 or less. The lower limit of the refractive index (n_{d}) is preferably 1.78, more preferably 1.80, and still more preferably 1.82. The upper limit of the refractive index (n_{d}) is preferably 2.03, more preferably 2.02, and still more preferably 2.01.

The Abbe number (ν_{d}) of the optical glass according to the third embodiment is 25 or more and 47 or less. The lower limit of the Abbe number (ν_{d}) is preferably 28, more preferably 29, and still more preferably 30. The upper limit of the Abbe number (ν_{d}) is preferably 44, more preferably 41, and still more preferably 38.

The specific gravity (S_{g}) of the optical glass according to the third embodiment is 4.2 or more and 6.5 or less. The lower limit of the specific gravity (S_{g}) is preferably 4.3, more preferably 4.6, and still more preferably 4.7. The upper limit of the specific gravity (S_{g}) is preferably 6.4, more preferably 6.3, and still more preferably 6.2.

ΔT can be used as an index of devitrification resistance stability. Generally, a high ΔT means that the devitrification resistance stability of the glass is high. In the present embodiment, both the glass transition temperature (T_{g}) and the crystallization onset temperature (Tₓ) can be measured by differential thermal analysis. In view of such circumstances, in the optical glass according to the present embodiment, the temperature difference (ΔT = Tₓ - T_{g}) between the glass transition temperature (T_{g}) and the crystallization onset temperature (Tₓ) is 73°C or more and 259°C or less. The lower limit of the difference is preferably 95°C, more preferably 115°C, and still more preferably 135°C. The upper limit of the difference is preferably 250°C, more preferably 230°C, and still more preferably 220°C.

The optical glass according to the third embodiment has a diameter (D) of 8 mm or more. The diameter (D) is preferably 9.2 mm, more preferably 9.4 mm, and still more preferably 9.6 mm. The upper limit of the diameter (D) is not particularly limited, and may be, for example, 11.8 mm or the like. The term "diameter" herein refers to the maximum value in the diameter direction of a glass gob, and in the case of a substantially spherical shape, refers to the diameter value thereof.

The optical glass according to the third embodiment has a thickness (T) of 4.5 mm or more. The lower limit of the thickness (T) is preferably 4.7 mm, more preferably 4.8 mm, and still more preferably 4.9 mm. The upper limit of the thickness (T) is not particularly limited, and may be, for example, 5.8 mm or the like. The term "thickness" herein refers to the height in a direction perpendicular to the maximum value of the diameter of the glass gob (diameter (D)), and in the case of a substantially spherical shape, refers to the diameter value thereof.

The optical glass according to the third embodiment has a weight of 1450 mg or more. The lower limit of the weight is preferably 1500 mg, more preferably 1600 mg, and still more preferably 1700 mg. The upper limit of the weight is not particularly limited, and may be, for example, 1950 mg or the like.

Next, applications of the optical glass according to the above-described first to third embodiments will be described.

From the viewpoints described above, the optical glass according to the first to third embodiments can be suitably used, for example, as an optical element included in an optical device. Such optical elements include mirrors, lenses, prisms, filters, and the like. The optical element may be composed solely of the optical glass according to the above-described embodiments, or the optical glass according to the above-described embodiments may be bonded with other optical materials (glass, resin, crystal, etc.), or a desired film may be formed on the optical glass according to the above-described embodiments. Examples of optical systems in which the above optical elements are used include objective lenses, condenser lenses, imaging lenses, interchangeable lenses for cameras, and the like. These optical systems can be suitably used in various optical devices such as imaging devices including interchangeable-lens cameras and non-interchangeable-lens cameras, and microscope devices such as fluorescence microscopes and multiphoton microscopes. Such optical devices are not limited to the imaging devices and microscopes described above, and include, but are not limited to, telescopes, binoculars, laser rangefinders, projectors, defect inspection devices, and the like. Examples thereof will be described below.

### <Imaging Device>

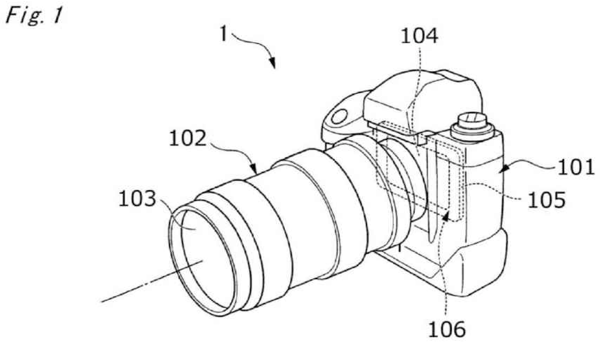

Fig.1 is a perspective view showing an example in which the optical device according to the present embodiment is an imaging device. An imaging device 1 is a so-called digital single-lens reflex camera (interchangeable-lens camera), and a photographing lens 103 (optical system) includes an optical element having, as a base material, the optical glass according to the present embodiment. A lens barrel 102 is detachably attached to a lens mount (not shown) of a camera body 101. Light passing through a lens 103 of the lens barrel 102 is then focused onto a sensor chip (solid-state imaging element) 104 of a multi-chip module 106 disposed on the rear side of the camera body 101. The sensor chip 104 is a bare chip such as a so-called CMOS image sensor, and the multi-chip module 106 is, for example, a COG (Chip On Glass) type module in which the sensor chip 104 is mounted as a bare chip on a glass substrate 105.

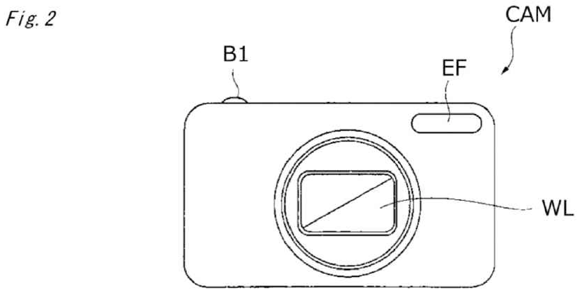

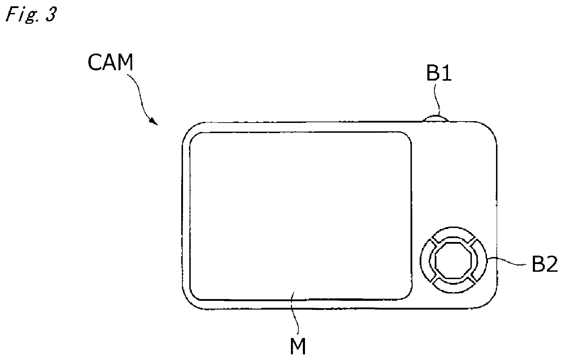

Figs.2 and 3 are schematic diagrams showing another example in which the optical device according to the present embodiment is an imaging device. Fig. 2 shows a front view of an imaging device CAM, and Fig. 3 shows a rear view of the imaging device CAM. The imaging device CAM is a so-called digital still camera (non-interchangeable-lens camera), and a photographing lens WL (optical system) includes an optical element having, as a base material, the optical glass according to the present embodiment.

When a power button (not shown) is pressed in the imaging device CAM, a shutter (not shown) of the photographing lens WL is opened, light from a subject (object) is condensed by the photographing lens WL, and an image is formed on an image sensor disposed on an image plane. The subject image formed on the image sensor is displayed on a liquid crystal monitor M disposed behind the imaging device CAM. After determining the composition of the subject image while viewing the liquid crystal monitor M, a photographer presses down a release button B1 to capture the subject image with the image sensor and record and store it in a memory (not shown).

In the imaging device CAM, an auxiliary light emitting unit EF that emits auxiliary light when the subject is dark, a function button B2 used for setting various conditions of the imaging device CAM, and the like are arranged.

Optical systems used in digital cameras and the like are required to have higher resolution, lower chromatic aberration, and smaller size. To achieve these, it is effective to use glasses having different dispersion characteristics in the optical system. In particular, there is a high demand for glass having a lower partial dispersion ratio (P_{g,F}) while having medium dispersion or high dispersion. From such viewpoints, the optical glass according to the present embodiment is suitable as a member of such optical devices. The optical device to which the present embodiment can be applied is not limited to the imaging devices described above, and may include, for example, projectors and the like. The optical element is also not limited to lenses, and may include, for example, prisms and the like.

### <Microscope>

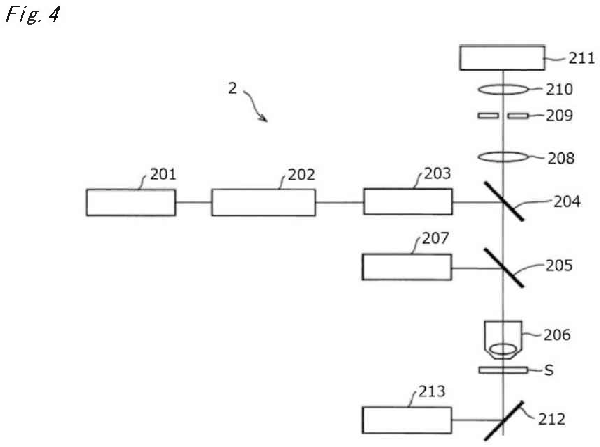

Fig.4 is a block diagram showing an example of a configuration of a multiphoton microscope 2 according to the present embodiment. The multiphoton microscope 2 includes an objective lens 206, a condenser lens 208, and an imaging lens 210. At least one of the objective lens 206, the condenser lens 208, and the imaging lens 210 includes an optical element having, as a base material, the optical glass according to the above-described embodiments. Hereinafter, the optical system of the multiphoton microscope 2 will be mainly described.

The pulsed laser device 201 emits, for example, ultrashort pulse light having a near-infrared wavelength (about 1000 nm) and a pulse width in the femtosecond range (for example, 100 femtoseconds) . The ultrashort pulse light immediately after being emitted from the pulsed laser device 201 is generally linearly polarized light polarized in a predetermined direction.

The pulse splitting device 202 divides the ultrashort pulse light and emits it while increasing the repetition frequency of the ultrashort pulse light.

The beam adjustment unit 203 has a function of adjusting the beam diameter of the ultrashort pulse light incident from the pulse splitting device 202 so as to match the pupil diameter of the objective lens 206; a function of adjusting the convergence and divergence angles of the ultrashort pulse light in order to correct axial chromatic aberration (focus difference) between the wavelength of light emitted from the sample S and the wavelength of the ultrashort pulse light; and a pre-chirp function (group velocity dispersion compensation function) for imparting opposite group velocity dispersion to the ultrashort pulse light in order to compensate for broadening of the pulse width of the ultrashort pulse light due to group velocity dispersion while passing through the optical system.

The ultrashort pulse light emitted from the pulsed laser device 201 has its repetition frequency increased by the pulse splitting device 202, and the adjustments described above are performed by the beam adjustment unit 203. The ultrashort pulse light emitted from the beam adjustment unit 203 is then reflected toward the direction of the dichroic mirror by the dichroic mirror 204, passes through the dichroic mirror 205, and is condensed by the objective lens 206 to irradiate the sample S. At this time, the ultrashort pulse light may be scanned over the observation surface of the sample S by using scanning means (not shown).

For example, when the sample S is observed by fluorescence observation, in the irradiated region of the sample S with the ultrashort pulse light and in the vicinity thereof, fluorescent dyes with which the sample S is stained are multiphoton-excited, and fluorescence having a wavelength shorter than that of the ultrashort pulse light, which is in the infrared wavelength range (hereinafter referred to as "observation light"), is emitted.

The observation light emitted from the sample S toward the objective lens 206 is collimated by the objective lens 206 and, depending on its wavelength, is either reflected by the dichroic mirror 205 or transmitted through the dichroic mirror 205.

The observation light reflected by the dichroic mirror 205 enters a fluorescence detection unit 207. The fluorescence detection unit 207 is composed of, for example, a barrier filter, a PMT (photomultiplier tube), and the like, receives the observation light reflected by the dichroic mirror 205, and outputs an electrical signal corresponding to the amount of the received light. The fluorescence detection unit 207 also detects observation light over the observation surface of the sample S in accordance with scanning of the ultrashort pulse light over the observation surface of the sample S.

By removing the dichroic mirror 205 from the optical path, all observation light emitted from the sample S toward the objective lens 206 may be detected by the fluorescence detection unit 211. In that case, the observation light is descanned by scanning means (not shown), transmitted through the dichroic mirror 204, condensed by the condenser lens 208, passes through a pinhole 209 provided at a position substantially conjugate with the focal position of the objective lens 206, passes through the imaging lens 210, and enters the fluorescence detection unit 211.

The fluorescence detection unit 211 is composed of, for example, a barrier filter, a PMT, and the like, receives the observation light that has been imaged on a light-receiving surface of the fluorescence detection unit 211 by the imaging lens 210, and outputs an electrical signal corresponding to the amount of the received light. The fluorescence detection unit 211 also detects observation light over the observation surface of the sample S in accordance with scanning of the ultrashort pulse light over the observation surface of the sample S.

By removing the dichroic mirror 205 from the optical path, all observation light emitted from the sample S toward the objective lens 206 may be detected by the fluorescence detection unit 211.

Further, observation light emitted from the sample S in a direction opposite to the objective lens 206 is reflected by a dichroic mirror 212 and enters a fluorescence detection unit 213. The fluorescence detection unit 213 is composed of, for example, a barrier filter, a PMT, and the like, receives the observation light reflected by the dichroic mirror 212, and outputs an electrical signal corresponding to the amount of the received light. The fluorescence detection unit 213 also detects observation light over the observation surface of the sample S in accordance with scanning of the ultrashort pulse light over the observation surface of the sample S.

The electrical signals respectively output from the fluorescence detection units 207, 211, and 213 are input, for example, to a computer (not shown), and the computer can generate an observation image based on the input electrical signals, display the generated observation image, and store data of the observation image.

### <Cemented Lens>

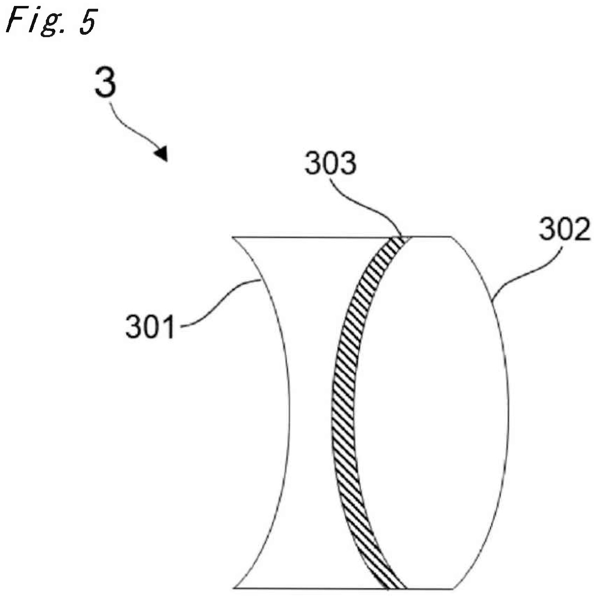

Fig.5 is a schematic diagram showing an example in which the optical glass according to the above-described first to third embodiments is applied to a cemented lens. A cemented lens 3 is a composite lens having a first lens element 301 and a second lens element 302. At least one of the first lens element and the second lens element uses the optical glass according to the above-described embodiments. The first lens element and the second lens element are bonded via a bonding member 303. As the bonding member 303, a known adhesive or the like can be used. The term "lens element" means each lens constituting a single lens or a cemented lens.

The cemented lens according to the present embodiment is useful from the viewpoint of chromatic aberration correction, and can be suitably used in the optical elements, optical systems, and optical devices described above. An optical system including the cemented lens can be particularly suitably used for interchangeable lenses for cameras, optical devices, and the like. In the above-described embodiment, a cemented lens using two lens elements has been described; however, the present invention is not limited thereto, and a cemented lens using three or more lens elements may also be employed. In the case of a cemented lens using three or more lens elements, it is sufficient that at least one of the three or more lens elements is formed using the optical glass according to the above-described embodiments.

### <Endoscope Device>

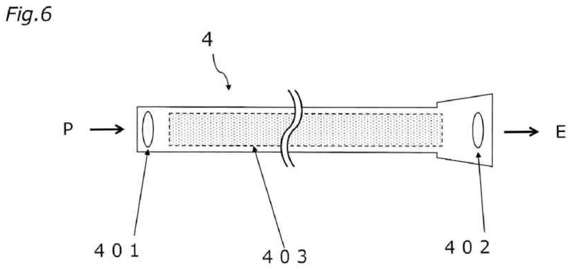

Fig.6 is a diagram showing an example of a configuration of an endoscope device according to the present embodiment. An endoscope device 4 according to the present embodiment includes an objective lens 401 and an eyepiece lens 402. The endoscope device may further include a relay section 403, and the relay section 403 may include a relay lens (not shown). At least one of the objective lens 401, the eyepiece lens 402, and the relay lens includes an optical element having, as a base material, the optical glass according to the above-described embodiments. In other words, at least one of the optical elements included in the endoscope device has, as a base material, the optical glass according to the above-described embodiments.

A light source (not shown) irradiates illumination light of an arbitrary type onto an affected part P, and observation light that is reflected light from the affected part P or fluorescence emitted from the affected part P is captured by the objective lens 401. An observer observes the obtained image of the affected part P through the eyepiece lens 402 (observation unit E), or captures the image using a desired imaging device. When the relay section 403 is provided, the image captured by the objective lens 401 may be relayed by the relay section 403 to a vicinity of the eyepiece lens 402. The relay section 403 may be composed of a plurality of relay lenses or may be an optical fiber.

The endoscope device according to the present embodiment may be, for example, a gastroscope, a hysteroscope, a colonoscope, an otorhinolaryngological camera, or the like. In particular, since the optical glass according to the present embodiment has a high refractive index, the optical system can be reduced in diameter, and thus it is suitably used for lenses for endoscope devices.

Next, a method for manufacturing the optical glass according to the above-described first to third embodiments will be described.

The optical glass according to the above-described embodiments can be manufactured, for example, using a floating furnace. Floating furnaces include electrostatic type, electromagnetic type, acoustic type, magnetic type, gas-jet type, and the like, and are not particularly limited; however, for floating melting of oxides, it is preferable to use a gas-jet type floating furnace. Hereinafter, a manufacturing method using a gas-jet type floating furnace will be described as an example.

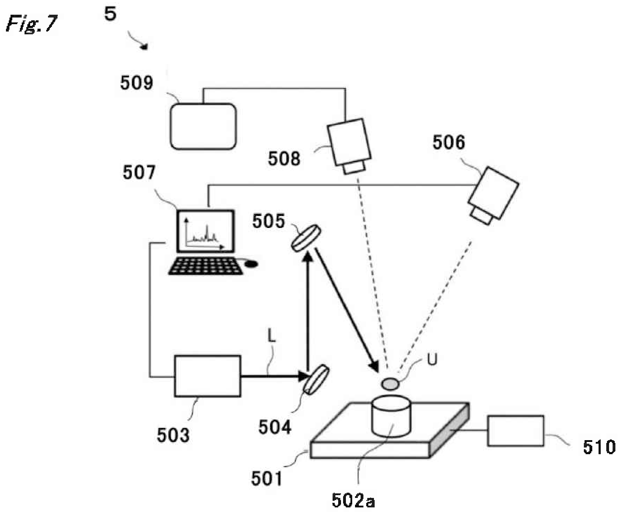

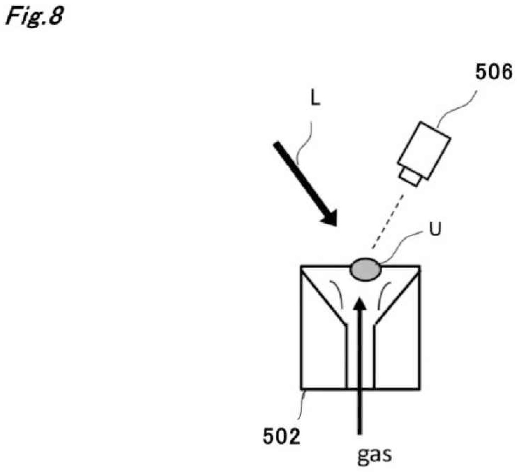

Fig.7 shows a schematic diagram of the overall configuration of a gas-jet type floating furnace, and Fig.8 is an enlarged schematic diagram of a pedestal on a stage of the gas-jet type floating furnace.

In the gas-jet type floating furnace 5, a raw material U is placed on a pedestal 502 on a stage 501. Laser light L emitted from a laser light source 503 is irradiated onto the raw material U via mirrors 504 and 505. The temperature of the raw material U heated by irradiation of the laser light L is monitored by a radiation thermometer 506. Based on the temperature information of the raw material U monitored by the radiation thermometer 506, the output of the laser light source 503 is controlled by a computer 507. Further, the state of the raw material U is captured by a CCD camera 508, and the captured image is output to a monitor 509 (see Fig. 7). Examples of the laser light source include a carbon dioxide laser, a semiconductor laser, a fiber laser, and a YAG laser.

In the gas-jet type floating furnace 5, the raw material U is maintained in a floating state by gas supplied to the pedestal (see Fig. 8). The flow rate of the gas supplied to the pedestal is controlled by a gas flow regulator 510. For example, gas may be injected from a nozzle having a conical hole, and the raw material U can be non-contact heated by the laser light L while being kept in a floating state. When the raw material U melts, it forms a spherical or ellipsoidal shape due to its own surface tension and floats in that state.

Thereafter, when the laser light L is shut off, the raw material U in the molten state is cooled, thereby obtaining transparent glass. The type of gas is not particularly limited, and any known gas may be appropriately used, for example oxygen, nitrogen, carbon dioxide, argon, air, or the like. The shape of the nozzle and the heating method are also not particularly limited, and known methods may be appropriately adopted. Further, external pressure may be applied to the raw material U in the molten state to form it into a desired thickness or size. The optical glass thus obtained can be processed into a desired shape as necessary and polished or otherwise treated to produce a desired optical element.

Conventionally, for example, when manufacturing optical glass using a container such as a crucible, it has been necessary to increase the glass-forming ability by including a large amount of network-forming oxides such as SiO₂, B₂O₃, P₂O₅, and GeO₂. Therefore, when a glass composition contains a large amount of materials that are not network-forming oxides and has a small content of the above-described network-forming oxides, crystallization (heterogeneous nucleation) originating at the container-melt interface often occurs, making vitrification difficult. In addition, glass gobs are sometimes used as materials for optical lenses of various optical instruments, and it is desirable that such glass gobs can be stably produced in large sizes.

In this regard, in the present embodiment, when optical glass is manufactured using, for example, the floating furnace described above, contact between the container and the melt does not occur, and therefore heterogeneous nucleation can be suppressed to the greatest extent possible. As a result, glass formation of the melt is greatly promoted, and vitrification becomes possible even for compositions having a small amount of network-forming oxides, or even compositions containing no such oxides, which cannot be produced by crucible melting. By adopting such a manufacturing method, optical glass having the composition system according to the present embodiment, which could not previously be vitrified, can be produced. Furthermore, large glass gobs as described above can also be produced. In addition, the optical glass according to the present embodiment has both a high refractive index and high ultraviolet transmittance. Because the optical glass according to the present embodiment has many such advantages, it can be applied as a high-refractive-index material or as a broadband transmission material.

### Examples

Next, examples of the present invention will be described. However, the present invention is not limited to these examples.

### <Preparation of Optical Glass>

The optical glass according to each example was prepared using the gas-jet type floating furnace 5 shown in Figs.7 and 8 according to the following procedure. First, glass raw materials selected from oxides were weighed so that the composition (mol%) shown in each table was obtained. The glass raw materials may also be selected from hydroxides, carbonates, nitrates, or sulfates. Next, the weighed raw materials were mixed in an alumina mortar. The mixed raw material was uniaxially pressed at 20 MPa to form a cylindrical pellet. The obtained pellet was fired in an electric furnace at 1000-1300°C in air for 6-12 hours to produce a sintered body. The obtained sintered body was roughly crushed, and 50-3500 mg was collected and placed on the nozzle of the pedestal. Then, while injecting air gas, a carbon dioxide laser was irradiated from above to melt the raw material. The melted raw material formed a spherical or ellipsoidal shape due to its own surface tension and was maintained in a floating state by the pressure of the gas. When the raw material was completely melted, the laser output was shut off to cool the material and obtain a gob (glass sphere). For the glasses of each example, no visible volatilization during melting was observed, and no bubbles or devitrification were observed.

The optical glass of Comparative Example 1 was prepared using a crucible, similarly to ordinary optical glass, according to the following procedure. First, glass raw materials selected from oxides, hydroxides, and carbonates were weighed so that the chemical composition (mol%) shown in Table 15 was obtained. Next, the weighed raw materials were mixed and placed in a platinum crucible, melted at a temperature of about 1400°C for about 1 hour, and stirred to achieve homogenization. Thereafter, the temperature was lowered to an appropriate level, the melt was cast into a mold or the like, and a sample was obtained by slow cooling.

### <Evaluation of Physical Properties>

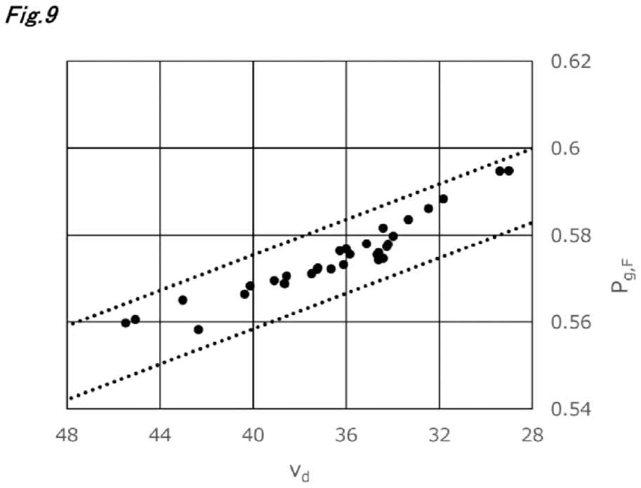

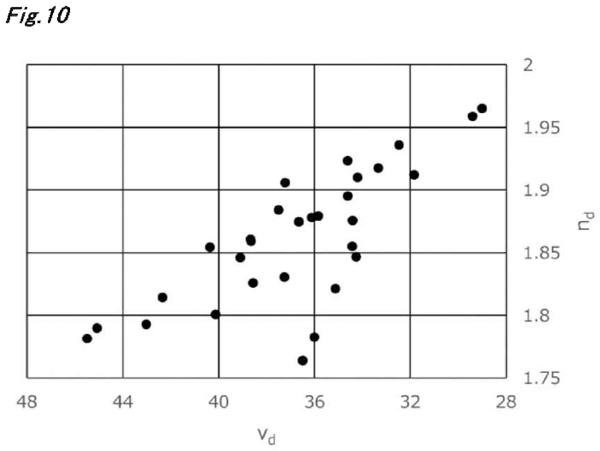

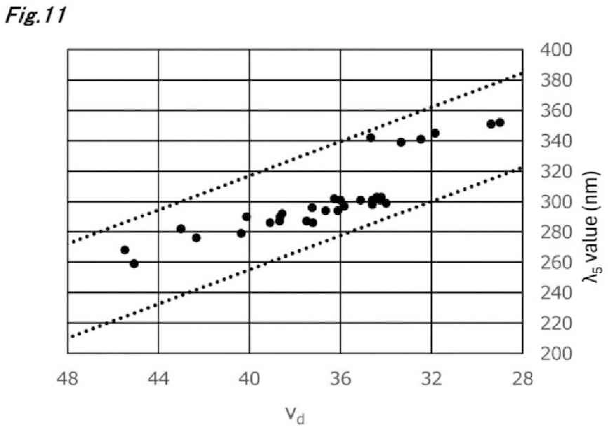

Figures 9 and 11 are graphs plotting optical constants for the examples, and Fig.10 is a graph plotting optical constant values of the examples.

### Measurement of Crystallization Onset Temperature (Tₓ), Glass Transition Temperature (T_{g}), and Their Difference (ΔT)

The crystallization onset temperature (Tₓ) and the glass transition temperature (T_{g}) were both measured by differential thermal analysis during heating (heating rate: 10°C/min), and the temperature difference was defined as ΔT = Tₓ - T_{g}.

### Diameter (D) and Thickness (T)

The diameter (D) and thickness (T) of each sample were measured using an electronic caliper.

### Specific Gravity (S_{g})

The specific gravity (S_{g}) of each sample was measured using a dry density meter (manufactured by Shimadzu Corporation; "AccuPyc II 1340"). The value of specific gravity was recorded to the third decimal place.

### Refractive Index (n_{d}) and Abbe Number (ν_{d})

Each sample was processed into a 90-degree prism, and the refractive index was measured using a refractive index measuring instrument (manufactured by Kalnew Optical Industry Co., Ltd.; "KPR-3000") by the V-block method. The Abbe number, partial dispersion ratio, and anomalous dispersion were calculated from the measured values.

In the prism coupling method, the glass sample was polished, the polished surface was brought into close contact with a single-crystal rutile prism, and the refractive index was determined by measuring the total reflection angle when light of the measurement wavelength was incident. Measurements were performed at three wavelengths-473 nm, 594.1 nm, and 656 nm-five times each, and the average value was used as the measurement value. Furthermore, the obtained measured values were fitted by the least-squares method using the following Drude-Voigt dispersion formula, and the refractive indices at the d-line (587.562 nm), F-line (486.133 nm), and C-line (656.273 nm), as well as the Abbe number (ν₄), were calculated.
[Equation 1] $\frac{1}{{n}^{2} - 1} = \frac{{πmc}^{2}}{{e}^{2} Nf} \left(\frac{1}{{λ}_{0}^{2}}-\frac{1}{{λ}^{2}}\right)$ Equation 1
(n: refractive index, m: electron mass, c: speed of light, e: elementary charge, N: number of molecules per unit volume, f: oscillator strength, λ₀: natural resonance wavelength, A: wavelength)

n_{d} indicates the refractive index of the glass with respect to light having a wavelength of 587.562 nm. The Abbe number (ν_{d}) was determined from the following formula (5). n_{C} and n_{F} indicate the refractive indices of the glass with respect to light having wavelengths of 656.273 nm and 486.133 nm, respectively. ${ν}_{d} = \left({n}_{d}-1\right) / \left({n}_{F}-{n}_{C}\right)$ (5) The values of the refractive index were expressed to six decimal places.

### Partial dispersion ratio (P_{g,F})

The partial dispersion ratio (P_{g,F}) of each sample indicates the ratio of the partial dispersion (n_{g} - n_{F}) to the principal dispersion (n_{F} - n_{C}), and was determined from the following formula (6). ng indicates the refractive index of the glass with respect to light having a wavelength of 435.835 nm. The value of the partial dispersion ratio (P_{g,F}) was expressed to six decimal places. ${P}_{g , F} = \left({n}_{g}-{n}_{F}\right) / \left({n}_{F}-{n}_{C}\right)$ (6)

### Anomalous dispersion (ΔP_{g,F})

The anomalous dispersion (ΔP_{g,F}) of each sample indicates a deviation from a partial-dispersion-ratio standard line based on two glass types, F2 and K7, as glasses having normal dispersion. That is, on coordinates in which the vertical axis represents the partial dispersion ratio (P_{g,F}) and the horizontal axis represents the Abbe number ν_{d}, the difference in the vertical coordinate between a straight line connecting the two glass types and the value of the glass to be compared corresponds to the deviation of the partial dispersion ratio, namely anomalous dispersion (ΔP_{g,F}). In the above coordinate system, when the value of the partial dispersion ratio is positioned above the straight line connecting the reference glass types, the glass exhibits positive anomalous dispersion (+ΔP_{g,F}), and when positioned below the straight line, the glass exhibits negative anomalous dispersion (-ΔP_{g,F}). The Abbe number ν_{d} and the partial dispersion ratio (P_{g,F}) of F2 and K7 are as follows.
F2: Abbe number ν_{d} = 36.33, partial dispersion ratio (P_{g,F}) = 0.5834 K7: Abbe number ν_{d} = 60.47, partial dispersion ratio (P_{g,F}) = 0.5429 ${ΔP}_{g , F} = {P}_{g} , F - \left(-0.0016777\times {ν}_{d}+0.6443513\right)$ (7)

### Internal transmittance

The internal transmittance of each sample is a value obtained by measuring the transmittance at wavelengths of 200-700 nm of a parallel-polished specimen having a thickness of 4-9 mm using a spectrophotometer (manufactured by Hitachi High-Tech Science Corporation; "UV-Visible-Near-Infrared Spectrophotometer UH4150"), further correcting the measurement by removing the contribution of reflectance to the transmittance at each wavelength using refractive-index measurement data, and converting the value to a transmittance corresponding to a thickness of 10 mm. Fitting by the least-squares method was performed using the following dispersion curve equation based on refractive index data obtained by the V-block method for the ten spectral lines of the h, g, F', F, e, d, C', C, r, and t lines.
[Equation 2] ${n}_{\left(λ\right)} = {A}_{0} + {A}_{1} {λ}^{2} + {A}_{2} {λ}^{4} + {A}_{3} {λ}^{- 2} + {A}_{4} {λ}^{- 4} + {A}_{5} {λ}^{- 6} + {A}_{6} {λ}^{- 8} + {A}_{7} {λ}^{- 10} + {A}_{8} {λ}^{- 12}$ Equation 2

Using the refractive index value n_{_λ} at each wavelength λ calculated by the dispersion curve equation, the surface reflectance R at each wavelength and the transmittance T_ₜₕ calculated in consideration of multiple reflections at the front surface and the rear surface of the incident light, assuming that there is no absorption of light inside, were calculated by the following formula. The internal transmittance T(_{t mm}) was calculated using the external transmittance measured value T_ₑₓₚ at a thickness of t mm and T_ₜₕ.
[Equation 3] $\begin{matrix}R = {\left(\frac{{n}_{λ} - 1}{{n}_{λ} + 1}\right)}^{2} \\ {T}_{th} = \frac{{\left(1-R\right)}^{2}}{1 - {R}^{2}} \\ {T}_{\left(tmm\right)} = \frac{{T}_{exp}}{{T}_{th}} \times 100 \left(%\right)\end{matrix}$ Equation 3

Using the internal transmittance T(t ₘₘ) at a thickness of t mm calculated as described above, the transmittance value T(_{10 mm}) for a thickness of 10 mm was calculated using the following formula.
[Equation 4] ${T}_{\left(10mm\right)} = exp \left(\frac{10}{t}\times ln\left(\frac{{T}_{\left(tmm\right)}}{100}\right)\right) \times 100 \left(%\right)$ Equation 4

Using the transmittance value T(_{10 mm}) calculated above for a 10 mm thickness, the wavelength (λ₅) at which the internal transmittance per 10 mm of the optical glass becomes 5% was determined.

Each table shows the composition and physical properties of each example. Unless otherwise noted, the content of each component is based on molar percentage.

**[Table 1]**

| mol % | Example 1 | Example 2 | Example 3 | Example 4 | Example 5 |
|---|---|---|---|---|---|
| SiO₂ | 34.37 | 29.59 | 28.20 | 28.20 | 27.34 |
| B₂O₃ | 0.00 | 0.00 | 0.00 | 0.00 | 0.00 |
| Al₂O₃ | 18.70 | 21.47 | 20.46 | 20.46 | 19.83 |
| Ba0 | 0.00 | 0.00 | 0.00 | 0.00 | 12.16 |
| La₂O₃ | 15.44 | 17.73 | 19.25 | 16.90 | 7.26 |
| Y₂O₃ | 0.00 | 0.00 | 0.00 | 0.00 | 0.00 |
| TiO₂ | 0.00 | 0.00 | 0.00 | 0.00 | 0.00 |
| ZrO₂ | 13.70 | 15.73 | 14.99 | 14.99 | 14.54 |
| Nb₂O₅ | 13.47 | 10.52 | 12.38 | 0.00 | 0.00 |
| Ta₂O₅ | 4.32 | 4.96 | 4.73 | 19.46 | 18.87 |
| total | 100.00 | 100.00 | 100.00 | 100.00 | 100.00 |
| Al₂O₃+TiO₂+ZrO₂+Nb₂O₆+Ta₂O₅ | 50.19 | 52.68 | 52.56 | 54.91 | 53.24 |
| La₂O₃ + Y₂O₃ + ZrO₂ + Ta₂O₅ | 33.47 | 38.42 | 38.97 | 51.35 | 40.66 |
| Nb₂O₅+TiO₂ | 13.47 | 10.52 | 12. 38 | 0.00 | 0.00 |
| SiO₂+ Al₂O₃ | 53.07 | 51.05 | 48.65 | 48.65 | 47.17 |
| La₂O₃+Ta₂O₅ | 19.76 | 22.69 | 23.98 | 36.36 | 26.13 |
| Diameter (D) /mm | 12.25 | 12.00 | 11.84 | 11.35 | 10.81 |
| Thickness (T) /mm | 5.34 | 5.44 | 5.51 | 5.14 | 5.14 |
| Weight/mg | | | | 2189 | |
| Specific gravity | 4.75 | 4.92 | 4.99 | 5.73 | 5.39 |
| T_{g}/°C | | 823.9 | | 853.5 | |
| Tₓ/°C | | 991.4 | | 1054.7 | |
| (Tₓ-T_{g})/°C | | 167.5 | | 201.2 | |
| n_{d} | 1.912259 | 1.91769 | 1.936019 | 1.923454 | 1.875667 |
| n_{c} | 1.903897 | 1. 909642 | 1.927599 | 1.915677 | 1.868262 |
| n_{g} | 1.932553 | 1.937175 | 1.956431 | 1.942358 | 1.893715 |
| n_{g} | 1.949412 | 1.953242 | 1.97333 | 1.95768 | 1.908341 |
| *ν* _{d} | 31.83483 | 33.33055 | 32.46459 | 34.61092 | 34.40329 |
| P_{g, F} | 0.588324 | 0.583554 | 0.58612 | 0.574266 | 0.574628 |
| λ₅ | 345 | 339 | 341 | 301 | 303 |

**[Table 2]**

| mol % | Example 6 | Example 7 | Example 8 | Example 9 | Example 10 |
|---|---|---|---|---|---|
| SiO₂ | 29.59 | 27.03 | 26.69 | 32.12 | 30.90 |
| B₂O₃ | 0.00 | 0.00 | 0.00 | 0.00 | 0.00 |
| Al₂O₃ | 21.47 | 19.61 | 19.36 | 24.38 | 23.46 |
| BaO | 0.00 | 16.54 | 21.33 | 0.00 | 0.00 |
| La₂O₃ | 12.79 | 3.80 | 0.00 | 16.90 | 13.24 |
| Y₂O₃ | 0.00 | 0.00 | 0.00 | 0.00 | 3.02 |
| TiO₂ | 0.00 | 0.00 | 0.00 | 0.00 | 0.00 |
| ZrO₂ | 15.73 | 14.37 | 14.19 | 7.15 | 14.43 |
| Nb₂O₅ | 0.00 | 0.00 | 0.00 | 0.00 | 0.00 |
| Ta₂O₅ | 20.42 | 18.66 | 18.42 | 19.46 | 14.95 |
| total | 100.00 | 100.00 | 100.00 | 100.00 | 100.00 |
| Al₂O₃+TiO₂+ZrO₂+Nb₂O₅+Ta₂O₅ | 57.62 | 52.64 | 51.98 | 50.99 | 52.84 |
| La₂O₃ + Y₂O₃ + ZrO₂ + Ta₂O₅ | 48.95 | 36.82 | 32.61 | 43.51 | 45.64 |
| Nb₂O₅+TiO₂ | 0.00 | 0.00 | 0.00 | 0.00 | 0.00 |
| SiO₂+ Al₂O₃ | 51.05 | 46.64 | 46.06 | 56.49 | 54.36 |
| La₂O₃+Ta₂O₅ | 33.22 | 22.45 | 18.42 | 36.36 | 28.20 |
| Diameter (D) /mm | 10.86 | 10.50 | 10.47 | 14.27 | 11.40 |
| Thickness (T) /mm | 5.03 | 5.04 | 5.14 | 5.62 | 5.29 |
| Weght /mg | 1901 | 1703 | 1701 | 3619 | 2085 |
| Specific gravity | 5.57 | 5.33 | 5.29 | 5.46 | 5.24 |
| T_{g}/°C | | | | 847.4 | 853.4 |
| Tₓ/°C | | | | 1080.8 | 1080.3 |
| (Tₓ-T_{g})/°C | | | | 233.4 | 226.9 |
| n_{d} | 1.910224 | 1.85512 | 1.846861 | 1.879285 | 1.874686 |
| n_{c} | 1.902703 | 1.847881 | 1.839669 | 1.872082 | 1.86768 |
| nF | 1.929319 | 1.872726 | 1.864389 | 1.896614 | 1.89155 |
| n_{g} | 1.9447 | 1.887176 | 1.878661 | 1.910734 | 1.905208 |
| ν_{d} | 34.19838 | 34.41819 | 34.25813 | 35.84237 | 36.64374 |
| P_{g, F} | 0.577885 | 0.581606 | 0.577346 | 0.575575 | 0.572183 |
| *λ* ₅ | 303 | 302 | 301 | 297 | 294 |

**[Table 3]**

| mol % | Example 11 | Example 12 | Example 13 | Example 14 | Example 15 |
|---|---|---|---|---|---|
| SiO₂ | 32.37 | 20.20 | 35.04 | 35.04 | 35.04 |
| B₂O₃ | 0.00 | 0.00 | 0.00 | 0.00 | 0.00 |
| Al₂O₃ | 24.57 | 28.99 | 18.34 | 26.60 | 26.60 |
| Ba0 | 0.00 | 0.00 | 0.00 | 0.00 | 0.00 |
| La₂O₃ | 17.03 | 20.10 | 18.44 | 10.18 | 18.44 |
| Y₂O₃ | 0.00 | 0.00 | 0.00 | 0.00 | 0.00 |
| TiO₂ | 0.00 | 0.00 | 0.00 | 0.00 | 0.00 |
| ZrO₂ | 15.11 | 17.83 | 16.36 | 16.36 | 16.36 |
| Nb₂O₅ | 0.00 | 0.00 | 0.00 | 0.00 | 0.00 |
| Ta₂O₅ | 10.92 | 12.89 | 11.82 | 11.82 | 3.57 |
| total | 100.00 | 100.00 | 100.00 | 100. 00 | 100.00 |
| Al₂O₃+TiO₂+ZrO₂+Nb₂O₅+Ta₂O₅ | 50.60 | 59.71 | 46.52 | 54.78 | 46.52 |
| La₂O₃ + Y₂O₃ + ZrO₂ + Ta₂O₅ | 43.06 | 50.81 | 46.62 | 38.36 | 38.36 |
| Nb₂O₅+TiO₂ | 0.00 | 0.00 | 0.00 | 0.00 | 0.00 |
| SiO₂+ Al₂O₃ | 56.94 | 49.19 | 53.38 | 61.64 | 61.64 |
| La₂O₃+Ta₂O₅ | 27.95 | 32.98 | 30.26 | 22.00 | 22.00 |
| Diameter (D) /mm | 11.71 | 11.29 | 11.57 | 12.14 | 10.99 |
| Thickness (T) /mm | 5.58 | 5.59 | 5.28 | 5.34 | 5.51 |
| Weight /mg | 2213 | | | | |
| Specific gravity | 5.10 | 5.43 | 5.35 | 4.84 | 4.61 |
| T_{g}/°C | 856.3 | 856.1 | 858 | 857.9 | 848 |
| Tₓ/°C | 1075.7 | 1043.8 | 1059.7 | 1064.7 | 973.5 |
| (Tₓ-T_{g})/°C | 219.4 | 187.7 | 201.7 | 206.8 | 125.5 |
| n_{d} | 1.859209 | 1.905983 | 1.884074 | 1.825744 | 1.814248 |
| n_{c} | 1.85267 | 1.898792 | 1.877139 | 1.819405 | 1.808564 |
| n_{F} | 1.874903 | 1.92314 | 1.900728 | 1.840819 | 1.827792 |
| n_{g} | 1.887548 | 1.937077 | 1.914199 | 1.853037 | 1.838526 |
| *ν* _{d} | 38.64566 | 37.20975 | 37.47823 | 38.56094 | 42.34699 |
| P_{g,F} | 0.568749 | 0.572408 | 0.571071 | 0.570561 | 0.558248 |
| *λ* ₅ | 290 | 286 | 287 | 292 | 276 |

**[Table 4]**

| mol % | Example 16 | Example 17 | Example 18 | Example 19 | Example 20 |
|---|---|---|---|---|---|
| SiO₂ | 30.86 | 34.66 | 36.34 | 34.73 | 43.69 |
| B₂O₃ | 0.00 | 0.00 | 0.00 | 0.00 | 0.00 |
| Al₂O₃ | 25.12 | 26.30 | 27.58 | 30.78 | 22.60 |
| Ba0 | 0.00 | 4.41 | 0.00 | 0.00 | 0.00 |
| La₂O₃ | 17.41 | 14.93 | 19.12 | 18.27 | 15.67 |
| Y₂O₃ | 0.00 | 0.00 | 0.00 | 0.00 | 0.00 |
| TiO₂ | 0.00 | 0.00 | 0.00 | 0.00 | 0.00 |
| ZrO₂ | 15.45 | 16.18 | 16.96 | 16.21 | 0.00 |
| Nb₂O₅ | 0.00 | 0.00 | 0.00 | 0.00 | 0.00 |
| Ta₂O₅ | 11.16 | 3.53 | 0.00 | 0.00 | 18.04 |
| total | 100.00 | 100.00 | 100.00 | 100. 00 | 100. 00 |
| Al₂O₃+TiO₂+ZrO₂+Nb₂O₅+Ta₂O₅ | 51.73 | 46.01 | 44.54 | 46.99 | 40.65 |
| La₂O₃ + Y₂O₃ + ZrO₂ + Ta₂O₅ | 44.02 | 34.63 | 36.08 | 34.49 | 33.71 |
| Nb₂O₅ +TiO₂ | 0.00 | 0.00 | 0.00 | 0.00 | 0.00 |
| SiO₂+ Al₂O₃ | 55.98 | 60.96 | 63.92 | 65.51 | 66.29 |
| La₂O₃+Ta₂O₅ | 28.57 | 18.45 | 19.12 | 18.27 | 33.71 |
| Diameter (D) /mm | 11.87 | 12.38 | 12.24 | 12.44 | 12.01 |
| Thickness (T) /mm | 5.47 | 5.6 | 5.89 | 5.94 | 5.25 |
| Weght /mg | | | 2214 | 2260 | 2208 |
| Specific gravity | | 4.38 | 4.37 | 4.29 | 5.14 |
| Tg/°C | | 856 | | | 852.5 |
| Tx/°C | | 929.3 | | | 1110.7 |
| (Tₓ-T_{g})/⁹C | | 73.3 | | | 258.2 |
| n_{d} | 1.846155 | 1.792881 | 1.789832 | 1.781404 | 1.830387 |
| n_{c} | 1.839745 | 1.787378 | 1.784593 | 1.776276 | 1.823956 |
| n_{F} | 1.861388 | 1.805808 | 1.802116 | 1.793456 | 1.846253 |
| n_{g} | 1.873714 | 1.816221 | 1.811939 | 1.803073 | 1.859008 |
| *ν* _{d} | 39.09601 | 43.02122 | 45.07402 | 45.48335 | 37.2421 |
| P_{g, F} | 0.569514 | 0.565003 | 0.560578 | 0.559779 | 0.57205 |
| λ₅ | 286 | 282 | 259 | 268 | 296 |

**[Table 5]**

| mol % | Example 21 | Example 22 | Example 23 | Example 24 | Example 25 |
|---|---|---|---|---|---|
| SiO₂ | 32.49 | 27.14 | 41.71 | 33.81 | 32.12 |
| B₂O₃ | 0.00 | 0.00 | 0.00 | 0.00 | 0.00 |
| Al₂O₃ | 37.50 | 21.47 | 12.18 | 25.66 | 24.38 |
| BaO | 0.00 | 0.00 | 0.00 | 0.00 | 0.00 |
| La₂O₃ | 11.65 | 16.27 | 16.75 | 28.31 | 10.90 |
| Y₂O₃ | 0.00 | 0.00 | 0.00 | 0.00 | 6.00 |
| TiO₂ | 0.00 | 0.00 | 0.00 | 0.00 | 0.00 |
| ZrO₂ | 4.93 | 9.90 | 9.29 | 2.26 | 7.15 |
| Nb₂O₅ | 0.00 | 20.66 | 0.00 | 0.00 | 0.00 |
| Ta₂O₅ | 13.42 | 4.55 | 20.08 | 9.96 | 19.46 |
| total | 100.00 | 100.00 | 100.00 | 100.00 | 100.00 |
| Al₂O₃+TiO₂+ZrO₂+Nb₂O₅+Ta₂O₅ | 55.85 | 56.59 | 41.54 | 37.88 | 50.99 |
| La₂O₃+Y₂O₃+ZrO₂+Ta₂O₅ | 30.01 | 30.72 | 46.11 | 40.53 | 43.51 |
| Nb₂O₅+TiO₂ | 0.00 | 20.66 | 0.00 | 0.00 | 0.00 |
| SiO₂+Al₂O₃ | 69.99 | 48.61 | 53.89 | 59.47 | 56.49 |
| La₂O₃+Ta₂O₅ | 25.07 | 20.82 | 36.83 | 38.27 | 30.36 |
| Diameter(D) /mm | 12.23 | 12.10 | 11.72 | 11.39 | 11.72 |
| Thickness (T) /mm | 5.57 | 5.44 | 5.03 | 5.72 | 5.24 |
| Weight /mg | 2228 | 2204 | 2217 | 2194 | 2213 |
| Specific gravity | 4.72 | 4.80 | 5.59 | 5.26 | 5.37 |
| Tg/°C | 850.1 | 779.4 | 869 | 865 | 855.8 |
| Tx/°C | 1052.4 | 993.2 | 1052.1 | 1070.1 | 1080.7 |
| (Tₓ-T_{g})/°C | 202.3 | 213.8 | 183.1 | 205.1 | 224.9 |
| n_{d} | 1.80075 | 1.965297 | 1.895134 | 1.854391 | 1.878074 |
| n_{c} | 1.794846 | 1.955616 | 1.88758 | 1.848176 | 1.870938 |
| n_{F} | 1.814801 | 1.988904 | 1.913447 | 1.869344 | 1.895253 |
| n_{g} | 1.826141 | 2.008704 | 1.928345 | 1.881333 | 1.90919 |
| *v*_{d} | 40.12779 | 28.99835 | 34.60525 | 40.36239 | 36.11244 |
| P_{g,F} | 0.568279 | 0.594809 | 0.575946 | 0.566374 | 0.573185 |
| λ₅ | 290 | 352 | 298 | 279 | 294 |

**[Table 6]**

| mol % | Example 26 | Example 27 | Example 28 | Example 29 | Example 30 |
|---|---|---|---|---|---|
| SiO₂ | 30.18 | 27.48 | 31.14 | 31.14 | 36.19 |
| B₂O₃ | 0.00 | 0.00 | 3.80 | 0.00 | 0.00 |
| Al₂O₃ | 22.90 | 21.74 | 23.64 | 23.64 | 19.68 |
| BaO | 0.00 | 0.00 | 0.00 | 0.00 | 13.58 |
| La₂O₃ | 15.88 | 16.47 | 16.38 | 16.38 | 3.43 |
| Y₂O₃ | 0.00 | 0.00 | 0.00 | 0.00 | 0.00 |
| TiO₂ | 0.00 | 0.00 | 0.00 | 3.04 | 0.00 |
| ZrO₂ | 6.72 | 10.03 | 14.54 | 6.93 | 8.39 |
| Nb₂O₅ | 0.00 | 19.68 | 0.00 | 0.00 | 0.00 |
| Ta₂O₅ | 24.33 | 4.61 | 10.51 | 18.87 | 18.73 |
| total | 100.00 | 100.00 | 100.00 | 100.00 | 100.00 |
| Al₂O₃+TiO₂+ZrO₂+Nb₂O₅+Ta₂O₅ | 53.95 | 56.05 | 48.68 | 52.48 | 46.80 |
| La₂O₃+Y₂O₃+ZrO₂+Ta₂O₅ | 46.92 | 31.10 | 41.42 | 42.18 | 30.55 |
| Nb₂O₅+TiO₂ | 0.00 | 19.68 | 0.00 | 3.04 | 0.00 |
| SiO₂+Al₂O₃ | 53.08 | 49.22 | 54.77 | 54.77 | 55.87 |
| La₂O₃+Ta₂O₅ | 40.20 | 21.08 | 26.89 | 35.25 | 22.16 |
| Diameter (D) /mm | 11.33 | 11.37 | 10.89 | 14.57 | 12.01 |
| Thickness (T) /mm | 5.28 | 5.26 | 5.46 | 5.56 | 5.29 |
| Weight /mg | | 1918 | 1884 | 3554 | 2221 |
| Specific gravity | | | | | |
| Tg/°C | 850 | | | | |
| Tx/°C | 1055.4 | | | | |
| (Tₓ/T_{g}) /°C | 205.4 | | | | |
| n_{d} | 1.910236 | 1.958879 | 1.86072 | 1.892578 | 1.821238 |
| n_{c} | 1.902413 | 1.94938 | 1.854129 | 1.885143 | 1.814347 |
| n_{F} | 1.929199 | 1.982009 | 1.876389 | 1.910884 | 1.837731 |
| n_{g} | 1.944728 | 2.001414 | 1.889051 | 1.925697 | 1.851247 |
| v_{d} | 33.98178 | 29.38732 | 38.66667 | 34.67575 | 35.11965 |
| P_{g,F} | 0.579743 | 0.594716 | 0.568823 | 0.575482 | 0.578002 |
| λ₅ | 299 | 351 | 287 | 342 | 301 |

**[Table 7]**

| mol % | Example 31 | Example 32 |
|---|---|---|
| SiO₂ | 43.24 | 47.31 |
| B₂O₃ | 0.00 | 0.00 |
| Al₂O₃ | 20.16 | 18.71 |
| BaO | 13.91 | 12.91 |
| La₂O₃ | 3.52 | 3.26 |
| Y₂O₃ | 0.00 | 0.00 |
| TiO₂ | 0.00 | 0.00 |
| ZrO₂ | 0.00 | 0.00 |
| Nb₂O₅ | 0.00 | 0.00 |
| Ta₂O₅ | 19.18 | 17.80 |
| total | 100.00 | 100.00 |
| Al₂O₃+TiO₂+ZrO₂+Nb₂O₅+Ta₂O₅ | 39.34 | 36.52 |
| La₂O₃+Y₂O₃+ZrO₂+Ta₂O₅ | 22.69 | 21.07 |
| Nb₂O₆+TiO₂ | 0.00 | 0.00 |
| SiO₂+Al₂O₃ | 63.40 | 66.02 |
| La₂O₃+Ta₂O₅ | 22.69 | 21.07 |
| Diameter (D) /mm | 12.26 | 12.44 |
| Thickness (T) /mm | 5.39 | 5.4 |
| Weght /mg | 2253 | 2253 |
| Specific gravity | | |
| T_{g}/°C | | |
| Tₓ/°C | | |
| (Tₓ-T_{g}) /°C | | |
| n_{d} | 1.782555 | 1.765317 |
| n_{c} | 1.776138 | 1.759088 |
| n_{F} | 1.797876 | 1.780189 |
| n_{g} | 1.810415 | 1.792351 |
| v_{d} | 35.9994 | 36.2692 |
| P_{g,F} | 0.576824 | 0.5764 |
| λ₅ | 301 | 302 |

From the above, it was found that the optical glasses of Examples 1-32 exhibit high transmittance in the medium-dispersion, high-refractive-index region. It was also found that large glass gobs can be manufactured stably.

**[Table 8]**

| mol % | Example 33 | Example 34 | Example 35 | Example 36 | Example 37 |
|---|---|---|---|---|---|
| SiO₂ | 19.71 | 19.71 | 7.01 | 12.92 | 12.82 |
| Al₂O₃ | 26.40 | 26.40 | 35.31 | 29.21 | 28.98 |
| MgO | | | | | |
| La₂O₃ | 17.73 | 20.20 | 18.98 | 22.30 | 17.30 |
| Y₂O₃ | | | | | |
| TiO₂ | | | | | |
| ZrO₂ | 15.73 | 15.73 | 16.84 | 15.48 | 15.35 |
| Nb₂O₅ | | 12.99 | | | 5.62 |
| Ta₂O₅ | 20.42 | 4.96 | 21.86 | 20.09 | 19.93 |
| total | 100.00 | 100.00 | 100.00 | 100.00 | 100.00 |
| SiO₂+Al₂O₃ | 46.12 | 46.12 | 42.32 | 42.13 | 41.79 |
| TiO₂+Nb₂O₅ | | 12.99 | | | 5.62 |
| La₂O₃+Ta₂O₅ | 38.15 | 25.16 | 40.84 | 42.39 | 37.23 |
| La₂O₃+Y₂O₃+ZrO₂+Ta₂O₆ | 53.88 | 40.89 | 57.68 | 57.87 | 52.59 |
| Al₂O₃+TiO₂+ZrO₂+Nb₂O₅+Ta₂O₅ | 62.56 | 60.09 | 74.01 | 64.78 | 69.88 |
| Diameter (D ) /mm | 10.78 | 11.77 | 10.1 | 9.96 | 10.14 |
| Thickness (T) /mm | 5.3 | 5.71 | 5.36 | 5.34 | 5.19 |
| Weight /mg | | | | | |
| Specific gravity | 5.79 | 5.08 | 6.01 | 5.96 | 5.81 |
| T_{g}/°C | | | 849.4 | 858 | |
| Tₓ/°C | | | 947.5 | 1006.7 | |
| Δ T/°C | | | 98.1 | 148.7 | |
| n_{d} | 1.936636 | 1.951738 | 1.957799 | 1.952633 | 1.974567 |
| n_{c} | 1.928756 | 1.943114 | 1.949671 | 1.944667 | 1.965749 |
| n_{F} | 1.955692 | 1.972687 | 1.977499 | 1.97203 | 1.996268 |
| n_{g} | 1.971278 | 1.990013 | 1.993531 | 1.987784 | 2.013962 |
| *v*_{d} | 34.77265 | 32.18267 | 34.41854 | 34.81464 | 31.93312 |
| P_{g,F} | 0.578631 | 0.585872 | 0.57611 | 0.575741 | 0.57977 |
| △P_{g,F} | -0.00738 | -0.00449 | -0.0105 | -0.0102 | -0.01101 |

**[Table 9]**

| mol % | Example 38 | Example 39 | Example 40 | Example 41 | Example 42 |
|---|---|---|---|---|---|
| SiO₂ | 13.58 | 12.95 | 12.76 | 12.43 | 11.58 |
| Al₂O₃ | 28.15 | 24.42 | 28.86 | 25.78 | 24.00 |
| MgO | | | | | 6.53 |
| La₂O₃ | 20.89 | 22. 36 | 20.43 | 25.36 | 19.98 |
| Y₂O₃ | | | | | |
| TiO₂ | | | | | |
| ZrO₂ | 16.27 | 15.52 | 15.29 | 14.89 | 13.87 |
| Nb₂O₅ | | 4.59 | 2.80 | 2.20 | 3.87 |
| Ta₂O₅ | 21.12 | 20.15 | 19.85 | 19.33 | 20.18 |
| total | 100.00 | 100.00 | 100.00 | 100.00 | 100.00 |
| SiO₂+Al₂O₃ | 41.73 | 37.38 | 41.63 | 38.21 | 35.58 |
| TiO₂+Nb₂O₅ | | 4.59 | 2.80 | 2.20 | 3.87 |
| La₂O₃+Ta₂O₅ | 42.00 | 42.51 | 40.28 | 44.69 | 40.16 |
| La₂O₃ + Y₂O₃ + ZrO₂ + Ta₂O₅ | 58.27 | 58.03 | 55.57 | 59.59 | 54.03 |
| Al₂O₃+TiO₂+ZrO₂+Nb₂O₅+Ta₂O₅ | 65.54 | 64.68 | 66.80 | 62.21 | 61.91 |
| Diameter (D) /mm | 10.05 | 9.93 | 10.9 | 9.88 | |
| Thickness (T) /mm | 5.25 | 5.15 | 5.26 | 5.21 | |
| Weight /mg | | | | | |
| Specific gravity | 5.95 | 5.98 | 5.85 | | |
| T_{g}/°C | 860.7 | 843.1 | 847.9 | 858.7 | 830.1 |
| Tₓ/°C | 1011.1 | 1000.2 | 993.1 | 1015.9 | 967.8 |
| Δ T/°C | 150.4 | 157.1 | 145.2 | 157.2 | 137.7 |
| n_{d} | 1.956518 | 1.989737 | 1.965743 | 1.976484 | 1.983011 |
| n_{c} | 1.948418 | 1.980784 | 1.957343 | 1.968048 | 1.974237 |
| n_{F} | 1.976265 | 2.011515 | 1.986207 | 1.996971 | 2.004459 |
| n_{g} | 1.992234 | 2.029434 | 2.002942 | 2.013714 | 2.022033 |
| v_{d} | 34.34905 | 32.20647 | 33.45839 | 33.7615 | 32.52634 |
| P_{g,F} | 0.573455 | 0.583092 | 0.579788 | 0.578882 | 0.581497 |
| △P_{g,F} | -0.01327 | -0.00723 | -0.00843 | -0.00883 | -0.00828 |

**[Table 10]**

| mol % | Example 43 | Example 44 | Example 45 | Example 46 | Example 47 |
|---|---|---|---|---|---|
| SiO₂ | 12.96 | 10.18 | 12.40 | 12.79 | 12.79 |
| Al₂O₃ | 26.88 | 27.84 | 25.71 | 24.07 | 25.22 |
| MgO | | | | | |
| La₂O₃ | 22.38 | 22.09 | 21.40 | 22.07 | 22.09 |
| Y₂O₃ | | | | | |
| TiO₂ | | | | | |
| ZrO₂ | 12.88 | 15.33 | 14.86 | 15.32 | 15.33 |
| Nb₂O₅ | 2.30 | 2.27 | 2.92 | 3.47 | 2.27 |
| Ta₂O₅ | 22.60 | 22.30 | 22.71 | 22.29 | 22.30 |
| total | 100.00 | 100.00 | 100.00 | 100.00 | 100.00 |
| SiO₂+Al₂O₃ | 39.84 | 38.01 | 38.11 | 36.85 | 38.01 |
| TiO₂+Nb₂O₅ | 2.30 | 2.27 | 2.92 | 3.47 | 2.27 |
| La₂O₃+Ta₂O₅ | 44.98 | 44.39 | 44.12 | 44.36 | 44.39 |
| La₂O₃+Y₂O₃+ZrO₂+Ta₂O₅ | 57.86 | 59.72 | 58.97 | 59.68 | 59.72 |
| Al₂O₃+TiO₂+ZrO₂+Nb₂O₅+Ta₂O₅ | 64.66 | 67.74 | 66.20 | 65.14 | 65.12 |
| Diameter (D) /mm | 9.94 | 9.87 | 9.24 | 9.97 | 9.88 |
| Thickness (T) /mm | 5.18 | 5.19 | 5.09 | 4.81 | 4.99 |
| Weight /mg | 1744 | 1750 | 1522 | 1752 | 1744 |
| Specific gravity | | | | | |
| Tg/°C | 853.4 | 856.7 | 862.2 | 851.3 | 856.1 |
| Tₓ/°C | 999.1 | 988.9 | 1005.8 | 1007.8 | 1007 |
| ΔT/°C | 145.7 | 132.2 | 143.6 | 156.5 | 150.9 |
| n_{d} | 1.976645 | 1.984345 | 1.989911 | 1.99265 | 1.984344 |
| n_{c} | 1.968045 | 1.975619 | 1.981006 | 1.983662 | 1.975557 |
| nF | 1.997566 | 2.005437 | 2.011499 | 2.01439 | 2.005507 |
| n_{g} | 2.014704 | 2.022736 | 2.029244 | 2.032287 | 2.022919 |
| v_{d} | 33.08306 | 33.01177 | 32.46355 | 32.30441 | 32.86624 |
| P_{g,F} | 0.580536 | 0.580153 | 0.581937 | 0.582433 | 0.581369 |
| △P_{g,F} | -0.00831 | -0.00881 | -0.00795 | -0.00772 | -0.00784 |

**[Table 11]**

| mol % | Example 48 | Example 49 | Example 50 | Example 51 | Example 52 |
|---|---|---|---|---|---|
| SiO₂ | 11.68 | 12.21 | 11.32 | 11.37 | 11.59 |
| Al₂O₃ | 24.22 | 23.65 | 23.48 | 23.57 | 24.03 |
| MgO | | | | | |
| La₂O₃ | 20.17 | 21.91 | 19.55 | 19.62 | 20.01 |
| Y₂O₃ | 1.59 | 1.67 | 1.54 | 1.55 | 1.58 |
| TiO₂ | | | 3.09 | 2.33 | 1.58 |
| ZrO₂ | 19.89 | 17.12 | 19.28 | 19.35 | 19.74 |
| Nb₂O₅ | 2.07 | 2.16 | 2.01 | 2.40 | 1.26 |
| Ta₂O₅ | 20.37 | 21.28 | 19.74 | 19.81 | 20.21 |
| total | 100.00 | 100.00 | 100.00 | 100.00 | 100.00 |
| SiO₂+Al₂O₃ | 35.91 | 35.86 | 34.80 | 34.93 | 35.62 |
| TiO₂+Nb₂O₅ | 2.07 | 2.16 | 5.10 | 4.73 | 2.85 |
| La₂O₃+Ta₂O₅ | 40.53 | 43.19 | 39.28 | 39.43 | 40.21 |
| La₂O₃+Y₂O₃+ZrO₂+Ta₂O₅ | 62.02 | 61.98 | 60.11 | 60.34 | 61.53 |
| Al₂O₃+TiO₂+ZrO₂+Nb₂O₅+Ta₂O₅ | 66.55 | 64.22 | 67.59 | 67.46 | 66.82 |
| Diameter (D) /mm | 10 | 10.29 | 10.15 | 10.14 | 10.09 |
| Thickness (T) /mm | 4.9 | 4.89 | 5.36 | 5.26 | 5.32 |
| Weight /mg | 1777 | 1.919 | 1871 | 1845 | 1866 |
| Specific gravity | | | | | |
| T_{g}/°C | 852.4 | | | | |
| Tₓ/°C | 1013.7 | | | | |
| ΔT/°C | 161.3 | | | | |
| n_{d} | 1.989383 | 1.990083 | 1.996542 | 1.997332 | 1.989673 |
| n_{c} | 1.980617 | 1.981313 | 1.988257 | 1.988439 | 1.981092 |
| n_{F} | 2.010485 | 2.011246 | 2.019102 | 2.019275 | 2.011054 |
| n_{g} | 2.027825 | 2.028621 | 2.037065 | 2.037239 | 2.028453 |
| v_{d} | 33.12518 | 33.07664 | 32.30806 | 32.34311 | 33.03094 |
| P_{g,F} | 0.580554 | 0.580463 | 0.582363 | 0.582566 | 0.580702 |
| △P_{g,F} | -0.00822 | -0.0084 | -0.00778 | -0.00752 | -0.00823 |

**[Table 12]**

| mol % | Example 53 | Example 54 | Example 55 | Example 56 | Example 57 |
|---|---|---|---|---|---|
| SiO₂ | 10.72 | 11.07 | 11.24 | 11.43 | 28.19 |
| Al₂O₃ | 24.26 | 22.94 | 23.31 | 23.70 | 20.45 |
| MgO | | | | | |
| La₂O₃ | 19.87 | 19.10 | 19.41 | 19.73 | 16.90 |
| Y₂O₃ | 1.57 | 1.51 | 1.53 | 1.56 | |
| TiO₂ | 1.88 | 5.28 | 3.22 | | |
| ZrO₂ | 19.60 | 18.84 | 19.15 | 19.45 | 14.99 |
| Nb₂O₅ | 2.04 | 1.96 | 2.53 | 4.21 | 6.89 |
| Ta₂O₅ | 20.06 | 19.29 | 19.60 | 19.92 | 12.57 |
| total | 100.00 | 100.00 | 100.00 | 100.00 | 100.00 |
| SiO₂+Al₂O₃ | 34.98 | 34.01 | 34.56 | 35.13 | 48.65 |
| TiO₂+Nb₂O₅ | 3.92 | 7.24 | 5.75 | 4.21 | 6.89 |
| La₂O₃+Ta₂O₅ | 39.93 | 38.39 | 39.01 | 39.65 | 29.47 |
| La₂O₃+Y₂O₃+ZrO₂+Ta₂O₅ | 61.10 | 58.74 | 59.69 | 60.66 | 44.46 |
| Al₂O₃+TiO₂+ZrO₂+Nb₂O₅+Ta₂O₅ | 67.84 | 68.32 | 67.81 | 67.29 | 54.90 |
| Diameter (D) /mm | 10.18 | 10.25 | 10.19 | 10.21 | |
| Thickness (T) /mm | 1 | 5.24 | 5.29 | 5.14 | |
| Weight /mg | 1885 | 1890 | 1880 | 1904 | |
| Specific gravity | | | | | |
| T_{g}/°C | | | | | |
| Tₓ/°C | | | | | |
| ΔT/°C | | | | | |
| n_{d} | 1.995542 | 2.003454 | 1.999567 | 2.000163 | 1.933266 |
| n_{c} | 1.986661 | 1.994185 | 1.990436 | 1.991057 | 1.924997 |
| n_{F} | 2.017225 | 2.025834 | 2.021587 | 2.022112 | 1.953345 |
| n_{g} | 2.034998 | 2.04433 | 2.039762 | 2.040207 | 1.969861 |
| v_{d} | 32.57237 | 31.70571 | 32.0878 | 32.20618 | 32.92176 |
| P_{g,F} | 0.581501 | 0.58441 | 0.583448 | 0.582676 | 0.582616 |
| △P_{g,F} | -0.0082 | -0.00675 | -0.00707 | -0.00764 | -0.0065 |

**[Table 13]**

| mol % | Example 58 | Example 59 | Example 60 | Example 61 | Example 62 |
|---|---|---|---|---|---|
| SiO₂ | 16.99 | 19.64 | 31.33 | 20.15 | 22.27 |
| Al₂O₃ | 22.76 | 37.71 | 11.62 | 24.06 | 21.63 |
| MgO | | | | | |
| La₂O₃ | 20.86 | 19.41 | 18.77 | 17.85 | 16.02 |
| Y₂O₃ | | | | | |
| TiO₂ | | | | | 7.41 |
| ZrO₂ | 13.56 | | 16.66 | 24.16 | 14.22 |
| Nb₂O₅ | 21.54 | 6.28 | 3.30 | | 6.54 |
| Ta₂O₅ | 4.28 | 16.96 | 18.32 | 13.77 | **11.92** |
| total | 100.00 | 100.00 | 100.00 | 100.00 | 100.00 |
| SiO₂+Al₂O₃ | 39.76 | 57.35 | 42.95 | 44.21 | 43.90 |
| TiO₂+Nb₂O₅ | 21.54 | 6.28 | 3.30 | | 13.94 |
| La₂O₃+Ta₂O₅ | 25.14 | 36.36 | 37.10 | 31.63 | 27.94 |
| La₂O₃+Y₂O₃+ZrO₂+Ta₂O₅ | 38.70 | 36.36 | 53.75 | 55.79 | 42.16 |
| Al₂O₃+TiO₂+ZrO₂+Nb₂O₅+Ta₂O₅ | 62.14 | 60.95 | 49.90 | 62.00 | 61.70 |
| Diameter (D) /mm | 9.77 | 10.55 | 10.45 | 10.27 | 10.65 |
| Thickness (T) /mm | 5.36 | 5.36 | 5.03 | 5.42 | 5.34 |
| Weight /mg | 1494 | 1816 | 1826 | 1823 | 1853 |
| Specific gravity | | | | | |
| T_{g}/°C | | 840 | 855.5 | 858.2 | 823.3 |
| Tx/°C | | 950.7 | 1044.8 | 944.6 | 1042.2 |
| ΔT/°C | | 110.7 | 189.3 | 86.4 | 218.9 |
| n_{d} | 2.009351 | 1.90071 | 1.96096 | 1.932613 | 1.962503 |
| n_{c} | 1.999241 | 1.893062 | 1.95238 | 1.925063 | 1.953492 |
| n_{F} | 2.034116 | 1.919287 | 1.981809 | 1.950989 | 1.98472 |
| n_{g} | 2.054842 | 1.93448 | 1.998952 | 1.965866 | 2.003142 |
| v_{d} | 28.94196 | 34.34547 | 32.65351 | 35.97211 | 30.82179 |
| P_{g,F} | 0.594294 | 0.579333 | 0.582521 | 0.573826 | 0.589919 |
| △P_{g,F} | -0.0015 | -0.0074 | -0.00705 | -0.01018 | -0.00272 |

**[Table 14]**

| mol % | Example 63 | Example 64 | Example 65 | Example 66 | Example 67 |
|---|---|---|---|---|---|
| SiO₂ | 22.69 | 11.85 | 13.40 | 27.60 | 14.12 |
| Al₂O₃ | 22.04 | 24.57 | 40.64 | 16.25 | 17.20 |
| MgO | | | | | |
| La₂O₃ | 16.32 | 14.40 | 20.92 | 18.24 | 18.57 |
| Y₂O₃ | 5.66 | | | | |
| TiO₂ | | 3.67 | | | 6.55 |
| ZrO₂ | 14.48 | 20.17 | | 22.24 | 17.22 |
| Nb₂O₅ | 6.66 | 2.10 | 6.77 | | 7.54 |
| Ta₂O₅ | 12.14 | 23.24 | 18.27 | 15.65 | 18.80 |
| total | 100.00 | 100.00 | 100.00 | 100.00 | 100.00 |
| SiO₂+Al₂O₃ | 44.73 | 36.42 | 54.04 | 43.86 | 31.32 |
| TiO₂+Nb₂O₅ | 6.66 | 5.77 | 6.77 | 0.00 | 14.08 |
| La₂O₃+Ta₂O₅ | 28.47 | 37.65 | 39.19 | 33.90 | 37.37 |
| La₂O₃+Y₂O₃+ZrO₂+Ta₂O₅ | 48.61 | 57.81 | 39.19 | 56.14 | 54.59 |
| Al₂O₃+TiO₂+ZrO₂+Nb₂O₅+Ta₂O₅ | 55.32 | 73.75 | 65.69 | 54.15 | 67.31 |
| Diameter (D) /mm | 10.43 | 10.27 | 10.52 | 10.5 | 10.37 |
| Thickness (T) /mm | 5.42 | 5.13 | 5.35 | 5.28 | 5.13 |
| Weight /mg | 1819 | | 1856 | 1901 | 1881 |
| Specific gravity | | | | | |
| Tg/°C | 844 | 840.3 | 842.2 | 860.6 | 825.7 |
| Tₓ/°C | 960.2 | 998.4 | 919.1 | 1002.2 | 1001.8 |
| ΔT/°C | 116.2 | 158.1 | 76.9 | 141.6 | 176.1 |
| n_{d} | 1.946076 | 2.000357 | 1.918646 | 1.937253 | 2.036462 |
| n_{c} | 1.937874 | 1.991041 | 1.910864 | 1.929464 | 2.026137 |
| n_{F} | 1.965983 | 2.023339 | 1.93809 | 1.95608 | 2.062081 |
| n_{g} | 1.982332 | 2.042219 | 1.953893 | 1.971405 | 2.08339 |
| v_{d} | 33.65741 | 30.97272 | 33.7415 | 35.21389 | 28.83547 |
| P_{g,F} | 0.581629 | 0.584556 | 0.580438 | 0.575781 | 0.592839 |
| △P_{g,F} | -0.00626 | -0.00783 | -0.00731 | -0.00949 | -0.00313 |

**[Table 15]**

| mol % | Comparative 1 Example |
|---|---|
| SiO₂ | 24.13 |
| B₂O₃ | 19. 47 |
| Al₂O₃ | 8. 59 |
| MgO | |
| BaO | 1.06 |
| ZnO | 36. 13 |
| La₂O₃ | 3.65 |
| Y₂O₃ | 2. 77 |
| TiO₂ | |
| ZrO₂ | 2.92 |
| Nb₂O₅ | |
| Ta₂O₅ | 1. 18 |
| Sb₂O₃ | |
| total | 100.00 |
| SiO₂+Al₂O₃ | 32.72 |
| TiO₂+Nb₂O₅ | |
| La₂O₃+Ta₂O₅ | 4.83 |
| La₂O₃ + Y₂O₃ + ZrO₂ + Ta₂O₅ | 10.52 |
| Al₂O₃+TiO₂+ZrO₂+Nb₂O₅+Ta₂O₅ | 12.69 |
| Diameter (D) /mm | |
| Thickness (T ) /mm | |
| Weight /mg | |
| Specific gravity | 3.950 |
| T_{g}/°C | 620 |
| Tₓ/°C | Not detected |
| Δ T/°C | |
| n_{d} | 1.67267 |
| n_{c} | 1.66856 |
| nF | 1.68226 |
| n_{g} | 1.68985 |
| v_{d} | 49.10 |
| P_{g,F} | 0.5540 |
| △P_{g,F} | -0.0080 |

From the above, it was found that the compositions of optical glasses in Examples 33-67 achieve high refractive index and medium dispersion, while simultaneously achieving reduced specific gravity and high thermal stability. It was also confirmed that large glass gobs can be stably manufactured. Such optical glasses are suitable for use as lens materials in various optical devices, and by using these glasses as lens materials, miniaturization of various optical devices can be achieved. In Comparative Example 1, a glass with a lower refractive index than the glasses of the present embodiment was obtained.

Furthermore, the optical glasses of Examples 1-67 all possess both high refractive index and medium dispersion, making them suitable for various optical elements in various optical devices. It was also found to be excellent from the perspective of further specific gravity reduction and thermal stability.

### Reference Signs List

1 ··· Imaging device
101 ··· Camera body
102 ··· Lens barrel
103 ··· Lens
104 ··· Sensor chip
105 ··· Glass substrate
106 ··· Multi-chip module
CAM ··· Imaging device (non-interchangeable lens camera)
WL ··· Imaging lens
M ··· LCD monitor
EF ··· Auxiliary light emitting unit
B1 ··· Release button
B2 ··· Function button
2 ··· Multiphoton microscope
201 ··· Pulse laser device
202 ··· Pulse divider
203 ··· Beam adjustment unit
204, 205, 212 ··· Dichroic mirrors
206 ··· Objective lens
207, 211, 213 ··· Fluorescence detector
208 ··· Condensing lens
209 ··· Pinhole
210 ··· Imaging lens
S ··· Sample
3 ··· Cemented lens
301 ··· First lens element
302 ··· Second lens element
303 ··· Cementing material
4 ··· Endoscope device
401 ··· Objective lens
402 ··· Eyepiece lens
403 ··· Relay unit
P ··· Affected part
E ··· Observation unit
5 ··· Gas floating furnace
501 ··· Stage
502 ··· Base
503 ··· Laser light source
504, 505 ··· Mirrors
506 ··· Radiation thermometer
507 ··· Computer
508 ··· CCD camera
509 ··· Monitor
510 ··· Gas flow controller
L ··· Laser light
U ··· Raw material

## Claims

1. An optical glass comprising, in mol%:
SiO₂ content: 7% or more and 55% or less;
Al₂O₃ content: 5% or more and 45% or less;
total content of La₂O₃, Y₂O₃, ZrO₂, and Ta₂O₅ (La₂O₃ + Y₂O₃ + ZrO₂ + Ta₂O₅) : 15% or more and 65% or less;
total content of Al₂O₃, TiO₂, ZrO₂, Nb₂O₅, and Ta₂O₅ (Al₂O₃ + TiO₂ + ZrO₂ + Nb₂O₅ + Ta₂O₅) : 32% or more and 78% or less.

2. The optical glass according to claim 1, wherein, in mol%, the total content of SiO₂ and Al₂O₃ (SiO₂ + Al₂O₃) is 28% or more and 75% or less.

3. The optical glass according to claim 1 or 2, wherein, in mol%, B₂O₃ content is 0% or more and 5% or less.

4. The optical glass according to any one of claims 1 to 3, wherein, in mol%, the total content of La₂O₃ and Ta₂O₅ (La₂O₃ + Ta₂O₅) is 13% or more and 50% or less.

5. The optical glass according to any one of claims 1 to 4, wherein, in mol%, the total content of Nb₂O₅ and TiO₂ (Nb₂O₅ + TiO₂) is 0% or more and 24% or less.

6. The optical glass according to any one of claims 1 to 5, wherein, in mol%,
La₂O₃ content: 0% or more and 33% or less;
Y₂O₃ content: 0% or more and 10% or less;
ZrO₂ content: 0% or more and 27% or less;
Ta₂O₅ content: 0% or more and 28% or less.

7. The optical glass according to any one of claims 1 to 6, wherein, in mol%,
MgO content: 0% or more and 9% or less;
BaO content: 0% or more and 25% or less.

8. The optical glass according to any one of claims 1 to 7, wherein, in mol%,
TiO₂ content: 0% or more and 8% or less;
Nb₂O₅ content: 0% or more and 22% or less.

9. The optical glass according to any one of claims 1 to 8, wherein, in mol%, La₂O₃ content is 10% or more and 30% or less.

10. The optical glass according to any one of claims 1 to 9, wherein, in mol%, Ta₂O₅ content is more than 0% and 28% or less.

11. The optical glass according to any one of claims 1 to 10, wherein the refractive index (n_{d}) with respect to the d-line is 1.75 or more and 2.05 or less.

12. The optical glass according to any one of claims 1 to 11, wherein the Abbe number (v_{d}) is 25 or more and 47 or less.

13. The optical glass according to any one of claims 1 to 12, wherein the specific gravity (S_{g}) of the optical glass is 4.2 or more and 6.5 or less.

14. The optical glass according to any one of claims 1 to 13, wherein the diameter (D) of the optical glass is 8 mm or more.

15. An optical glass comprising, in mol%:
SiO₂ content: 15% or more and 55% or less;
Al₂O₃ content: 7% or more and 42% or less;
total content of TiO₂ and Nb₂O₅ (TiO₂ + Nb₂O₅) : 0% or more and 21% or less;
total content of La₂O₃, Y₂O₃, ZrO₂, and Ta₂O₅ (La₂O₃ + Y₂O₃ + ZrO₂ + Ta₂O₅) : 15% or more and 55% or less;
total content of Al₂O₃, TiO₂, ZrO₂, Nb₂O₅, and Ta₂O₅ (Al₂O₃ + TiO₂ + ZrO₂ + Nb₂O₅ + Ta₂O₅) : 32% or more and 65% or less.

16. The optical glass according to claim 15, wherein, in mol%, La₂O₃ content: 0% or more and 33% or less;
Y₂O₃ content: 0% or more and 10% or less;
ZrO₂ content: 0% or more and 23% or less;
Ta₂O₅ content: 0% or more and 25% or less.

17. The optical glass according to claim 15 or 16, wherein, in mol%, BaO content is 0% or more and 25% or less.

18. The optical glass according to any one of claims 15 to 17, wherein, in mol%, B₂O₃ content is 0% or more and 5% or less.

19. The optical glass according to any one of claims 15 to 18, wherein, in mol%,
Nb₂O₅ content: 0% or more and 21% or less;
TiO₂ content: 0% or more and 5% or less.

20. The optical glass according to any one of claims 15 to 19, wherein, in mol%, the total content of SiO₂ and Al₂O₃ (SiO₂ + Al₂O₃) is 42% or more and 75% or less.

21. The optical glass according to any one of claims 15 to 20, wherein a wavelength (λ₅) at which an internal transmittance per 10 mm is 5% is 352 nm or less.

22. The optical glass according to any one of claims 15 to 21, wherein the refractive index (n_{d}) with respect to the d-line is 1.75 or more and 1.97 or less.

23. The optical glass according to any one of claims 15 to 22, wherein the Abbe number (v_{d}) is 28 or more and 47 or less.

24. The optical glass according to any one of claims 15 to 23, wherein the partial dispersion ratio (P_{g,F}) satisfies formula (1): ${P}_{g , F} < - 0.00204 \times {ν}_{d} + 0.657$ (1).

25. The optical glass according to any one of claims 15 to 24, wherein the wavelength (λ₅) at which an internal transmittance per 10 mm is 5% satisfies formula (3): ${λ}_{5} < - 5.625 \times {ν}_{d} + 542$ (3).

26. The optical glass according to any one of claims 15 to 25, wherein the specific gravity (S_{g}) is 4.2 or more and 5.8 or less.

27. The optical glass according to any one of claims 15 to 26, wherein a temperature difference (ΔT = Tₓ - T_{g}) between a glass transition temperature (T_{g}) and a crystallization onset temperature (Tₓ) is 73°C or more and 259°C or less.

28. The optical glass according to any one of claims 15 to 27, wherein the diameter (D) is 10 mm or more.

29. An optical glass comprising, in mol%:
SiO₂ content: 7% or more and 35% or less;
Al₂O₃ content: 5% or more and 45% or less;
total content of La₂O₃, Y₂O₃, ZrO₂, and Ta₂O₅ (La₂O₃ + Y₂O₃ + ZrO₂ + Ta₂O₅) : 30% or more and 65% or less;
total content of Al₂O₃, TiO₂, ZrO₂, Nb₂O₅, and Ta₂O₅ (Al₂O₃ + TiO₂ + ZrO₂ + Nb₂O₅ + Ta₂O₅) : 45% or more and 78% or less.

30. The optical glass according to claim 29, wherein, in mol%,
the total content of La₂O₃ and Ta₂O₅ (La₂O₃ + Ta₂O₅) is 20% or more and 50% or less.

31. The optical glass according to claim 29 or 30, wherein, in mol%, the total content of Nb₂O₅ and TiO₂ (Nb₂O₅ + TiO₂) is 0% or more and 24% or less.

32. The optical glass according to any one of claims 29 to 31, wherein, in mol%,
La₂O₃ content: 10% or more and 30% or less;
Ta₂O₅ content: more than 0% and 28% or less.

33. The optical glass according to any one of claims 29 to 32, wherein, in mol%,
MgO content: 0% or more and 9% or less;
Y₂O₃ content: 0% or more and 8% or less;
ZrO₂ content: 0% or more and 27% or less.

34. The optical glass according to any one of claims 29 to 33, wherein, in mol%,
TiO₂ content: 0% or more and 8% or less;
Nb₂O₅ content: 0% or more and 22% or less.

35. The optical glass according to any one of claims 29 to 34, wherein the refractive index (n_{d}) with respect to the d-line is 1.85 or more and 2.05 or less.

36. The optical glass according to any one of claims 29 to 35, wherein the Abbe number (v_{d}) is 25 or more and 40 or less.

37. The optical glass according to any one of claims 29 to 36, wherein the partial dispersion ratio (P_{g,F}) satisfies the following formula (1): $- 0.0028 \times {ν}_{d} + 0.5606 < {P}_{g , F} < - 0.0028 \times {ν}_{d} + 0.6775$ (1).

38. The optical glass according to any one of claims 29 to 37, wherein the specific gravity (S_{g}) is 4.5 or more and 6.5 or less.

39. The optical glass according to any one of claims 29 to 38, wherein a temperature difference (ΔT = Tₓ - T_{g}) between a glass transition temperature (T_{g}) and a crystallization onset temperature (Tₓ) is 75°C or more and 220°C or less.

40. The optical glass according to any one of claims 29 to 39, wherein the diameter (D) is 8 mm or more.

41. An optical element comprising the optical glass according to any one of claims 1 to 40.

42. An optical system comprising the optical element according to claim 41.

43. A microscope objective lens comprising the optical system according to claim 42.

44. An interchangeable lens for a camera comprising the optical system according to claim 42.

45. An endoscope device comprising the optical system according to claim 42.

46. An optical device comprising the optical system according to claim 42.
